(19) Europäisches Patentamt European Patent Office Office européen des brevets

(11) **EP 2 839 626 B1**

(12) **EUROPEAN PATENT SPECIFICATION**

(45) Date of publication and mention of the grant of the patent:
**11.09.2019 Bulletin 2019/37**

(21) Application number: **13706362.4**

(22) Date of filing: **08.02.2013**

(51) Int Cl.:
*H04L 29/08* (2006.01)  *H04L 12/54* (2013.01)

(86) International application number:
**PCT/US2013/025409**

(87) International publication number:
**WO 2013/158201 (24.10.2013 Gazette 2013/43)**

(54) **SYSTEMS AND METHODS FOR APPLICATION-AWARE ADMISSION CONTROL IN A COMMUNICATION NETWORK**

SYSTEME UND VERFAHREN FÜR ANWENDUGS BEWUSSTE ZULASSUNGSSTEUERUNG IN EINEM KOMMUNIKATIONSNETZWERK

SYSTÈMES ET PROCÉDÉS POUR UN CONTRÔLE D'ADMISSION COMPATIBLE AVEC UNE APPLICATION DANS UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2012 US 201261625459 P**
**01.05.2012 US 201261640984 P**
**07.02.2013 US 201313761645**

(43) Date of publication of application:
**25.02.2015 Bulletin 2015/09**

(73) Proprietor: **Taiwan Semiconductor Manufacturing Company, Ltd.**
**Hsinchu 300-78 (TW)**

(72) Inventors:
• **STANWOOD, Kenneth, L.**
**San Diego, CA 92128 (US)**
• **GELL, David**
**San Diego, CA 92128 (US)**
• **RODDY, Warren**
**San Diego, CA 92128 (US)**
• **BAO, Yiliang**
**San Diego, CA 92128 (US)**
• **XU, Haibo**
**San Diego, CA 92128 (US)**

(74) Representative: **FRKelly**
**27 Clyde Road**
**Dublin D04 F838 (IE)**

(56) References cited:
**WO-A1-2010/138035**   **US-A1- 2002 188 732**
**US-A1- 2004 013 089**   **US-A1- 2005 271 048**

**Description**

BACKGROUND

The present invention generally relates to the field of communication systems and more specifically to systems and methods for application-aware admission control in a communication network.

In a communication network, the rate at which data can be effectively transported between the various nodes in the network is limited. In a wired network, the limitation is often a function of equipment capability. For example, a gigabit Ethernet link can transport no more than one billion bits per second. In a wireless network, the limitation is often a function of channel bandwidth and the transmission technology and communication protocols used. A wireless network is further constrained by the amounts of spectrum allocated for particular services and areas and the quality of the signals between transmitting and receiving nodes. Additionally, the rates at which data can be transported in a wireless network often vary over time.

Historically, communication systems have segregated traffic by classes of service (CoS) in the core, such as in a packet gateway (P-GW) in a long term evolution (LTE) system. This has the benefit that operator provided services such as voice and video from the operator's own or coordinated content delivery network (CDN) are able to be given quality of service (QoS) guarantees such as guaranteed bit rates (GBR). Traffic not associated with operator provided services is typically less differentiated, leading to heterogeneous traffic grouped into the same CoS. Further, this traffic is often provided resources on a best effort basis, ignoring the QoS needs of the specific application generating the traffic, and ignoring the quality of experience (QoE) perceived by the end user.

Additional communication traffic may be from over-the-top (OTT) services, that is, services that are not operator provided or coordinated. Skype voice over internet protocol (VoIP), YouTube progressive download video, Netflix streaming video, and Pandora radio streaming audio are examples of OTT services. OTT voice and video services tend to be grouped together as best effort traffic along with email, social networking, and file transfer. When a network becomes congested, the OTT services are typically all treated the same regardless of the impact in perceived quality by the end user. They are typically scheduled within the same CoS. Additionally, OTT services are typically grouped into the same logical bearer, logical link, or other virtual transmission channel. In today's communications systems, admission control is performed on a logical bearer basis without regard to the mix of services on the bearer. Consequently, real-time services such as voice, streaming video, and streaming audio are perceived to have a substantial degradation in QoE relative to non-real-time services such as email.

Published PCT Patent Application no. WO 2010/138035 relates to a method and apparatuses for controlling a peer-to- peer communication involving media communication between a subscriber and one or more opposite peers. When a policy node detects that the peer-to-peer communication is activated for the subscriber, session parameters are determined for the media communication based on predefined peer-to-peer service rules configured at the policy node. The session parameters are then implemented in an access gateway that controls network resources for the media communication.

Published US Patent Application No. 2002/188732 relates to a system and method for allocating bandwidth across a network to and from different end point nodes. Advanced traffic processors associated with end point nodes detect and classify packets transferred across a network and allocate bandwidth. A packet policy module of the advanced traffic processor allocates bandwidth by applying policy definitions, flow ID rules, and flow policy maps to prioritize packet flows.

SUMMARY

Systems and methods for application-aware admission control in a communication network are provided. The systems and methods provided herein can use information about applications to make admission control decisions. Example admission control decisions include admit, deny, modify, or delay. Information about applications can include, for example, application classes and specific applications. The application information can be detected, for example, by inspecting packets. The systems and methods may be used, for example, in a wireless base station.

In an aspect, the invention provides an access node including: a transceiver module configured to provide communications with terminal nodes; a packet inspection module configured to inspect packets communicated with the terminal nodes to detect information about applications associated with the packets; and an admission control module configured to detect admission requests from the terminal nodes, the admission requests being requests for communication services, and determine admission control responses to the admission requests based on the application information and information about congestion in communications with the terminal nodes.

In another aspect, the invention provides an access node, including: a transceiver module configured to provide communications between the access node and terminal nodes; backhaul interface module configured to provide communications between the access node and devices in a network; and a processor coupled to the transceiver and configured to detect an admission request packets. The systems and methods may be used, for example, in a wireless base station.

In an aspect, the invention provides an access node including: a transceiver module configured to provide communications with a terminal node; a packet inspection module configured to inspect packets communicated with the terminal node over at least one existing bearer to detect information about applications associated with the packets; and an admission control module configured to detect an admission request sent from the terminal node over one of the at least one existing bearer, the admission request being a request for a new service including at least a video service, and to determine at least one admission control response to the admission request based on the application information associated with the packets of the admission request and based on information about congestion in communications with the terminal node, wherein the at least one admission control response includes action on one or more packets that are associated with an admission protocol corresponding to the admission request, wherein the action on one or more packets includes admitting, denying, modifying, or delaying, wherein the access node further comprises: a scheduler module configured to receive downlink packets, group the downlink packets into queues, and schedule the downlink packets for transmission to one or more of the terminal nodes utilizing scheduler parameters, wherein the admission control module creates a control response to change scheduling priorities or scheduling resource allocation, and receives updates to scheduler parameters from the scheduler module.

In another aspect, the invention provides a method for use in determining admission control responses, the method including: inspecting packets communicated with a terminal node over at least one existing bearer to detect information about applications associated with the packets; detecting an admission request sent from the terminal node over one of the at least one existing bearer, the admission request being a request for a new service including at least a video service; determining at least one admission control response to the admission request based on the application information associated with the packets of the admission request and based on information about congestion affecting communications with the terminal node, wherein the at least one admission control response includes action on one or more packets that are associated with an admission protocol corresponding to the admission request, wherein the action on one or more packets includes admitting, denying, modifying, or delaying, wherein the method further comprises: receiving downlink packets, grouping the downlink packets into queues, and scheduling the downlink packets for transmission to one or more of the terminal nodes utilizing scheduler parameters; suppling congestion metrics to the admission control module for use in determining admission control responses; and changing scheduling priorities or scheduling resource allocation, and updating to the scheduler parameters.

Other features and advantages of the present invention should be apparent from the following description which illustrates, by way of example, aspects of the invention.

BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 is a block diagram of a wireless communication network in which systems and methods disclosed herein can be implemented in accordance with aspects of the invention;

FIG. 2 is a block diagram of an access node in accordance with aspects of the invention;

FIG. 3 is a diagram of a communication system illustrating aspects of an access node in accordance with aspects of the invention;

FIG. 4 is a diagram of a communication system illustrating aspects of an eNodeB in accordance with aspects of the invention;

FIG. 5 is a block diagram of a communication system with application aware-admission control in accordance with aspects of the invention;

FIG. 6 is a flowchart of a process for admission control in accordance with aspects of the invention;

FIG. 7 is a flowchart of a process that provides for graceful degradation of services in a communication network in accordance with aspects of the invention;

FIG. 8 is a block diagram of a packet inspection module in accordance with aspects of the invention;

FIG. 9 is a block diagram of a packet classification module in accordance with aspects of the invention; and

FIG. 10 is a block diagram of an application session detection module in accordance with aspects of the invention.

DETAILED DESCRIPTION

Systems and methods for communication systems with application-aware admission control are provided. Application-aware admission control can improve users' quality of experience (QoE). The systems and methods are particularly useful in capacity and spectrum constrained, multiple-access communication systems. The systems and methods disclosed herein can be used with classes of service that contain data streams, flows, or sessions from heterogeneous applications.

The systems and methods disclosed herein can be applied to various capacity-limited communication systems, including wireline and wireless technologies. For example, the systems and methods disclosed herein can be used with Cellular 2G, 3G, 4G (including long term evolution (LTE), LTE Advanced, and WiMAX), cellular backhaul, Wi-Fi, Ultra Mobile Broadband (UMB), cable modem, and other point-to-point or point-to-multipoint wireline or wireless technologies. For concise exposition, various embodiments are described using terminology and organization of particular technologies, standards, and services. However, the systems and methods described herein are broadly applicable to other technologies, standards, and services.

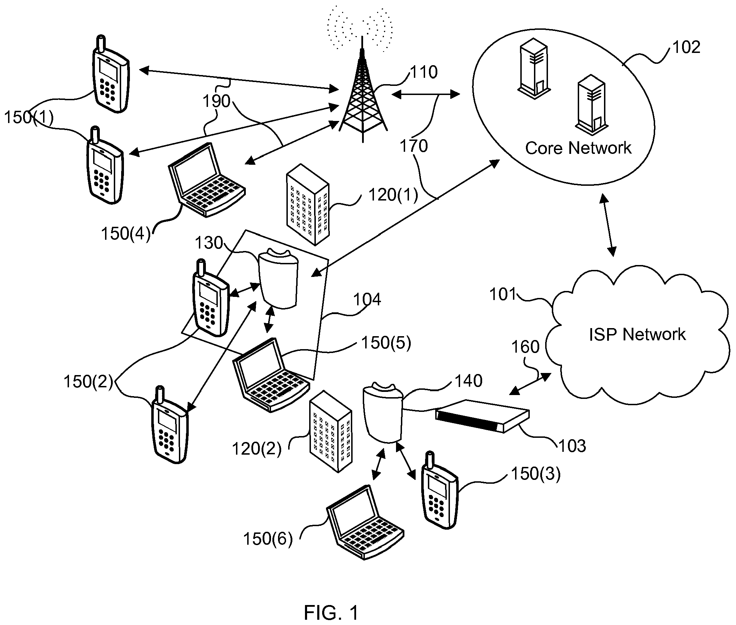

FIG. 1 is a block diagram of a wireless communication network in which systems and methods disclosed herein can be implemented in accordance with aspects of the invention. A macro base station 110 is connected to a core network 102 through a backhaul connection 170. In an embodiment, the backhaul connection 170 is a bidirectional link or two unidirectional links. The direction from the core network 102 to the macro base station 110 is referred to as the downstream or downlink (DL) direction. The direction from the macro base station 110 to the core network 102 is referred to as the upstream or uplink (UL) direction.

Subscriber stations 150(1) and 150(4) can connect to the core network 102 through the macro base station 110. Wireless links 190 between subscriber stations 150 and the macro base station 110 are bidirectional point-to-multipoint links, in an embodiment. The direction of the wireless links 190 from the macro base station 110 to the subscriber stations 150 is referred to as the downlink or downstream direction. The direction of the wireless links 190 from the subscriber stations 150 to the macro base station 110 is referred to as the uplink or upstream direction. Subscriber stations are sometimes referred to as user equipment (UE), users, user devices, clients, handsets, mobile stations, terminal nodes, or user terminals and are often mobile devices such as smart phones or tablets. A subscriber station may include multiple physical devices, for example, a wireless dongle coupled to a notebook computer. The subscriber stations 150 access content over the wireless links 190 using base stations, such as the macro base station 110, as a bridge. That is to say, the base stations generally pass user application data and any user application control messages between the subscriber stations 150 and the core network 102 without the base station being a destination for the data and control messages or a source of the data and control messages.

In the network configuration illustrated in FIG. 1, an office building 120(1) causes a coverage shadow 104 which cannot be reached by the macro base station 110. A pico station 130 can provide coverage to subscriber stations 150(2) and 150(5) in the coverage shadow 104. The pico station 130 is connected to the core network 102 via a backhaul connection 170. The subscriber stations 150(2) and 150(5) may be connected to the pico station 130 via links that are similar to or the same as the wireless links 190 between subscriber stations 150(1) and 150(4) and the macro base station 110.

In another office building 120(2), an enterprise femtocell 140 provides in-building coverage to subscriber stations 150(3) and 150(6). The enterprise femtocell 140 can connect to the core network 102 via an Internet service provider (ISP) network 101 by utilizing a broadband connection 160 provided by an enterprise gateway 103.

The pico station 130, the enterprise femtocell 140, and similar devices may be referred to as small form factor (SFF) base stations. The various devices or nodes, such as the macro base station 110, the pico station 130, the enterprise femtocell 140, the enterprise gateway 103, and devices in the core network 102 and the ISP network 101, in the communication network may be referred to as network nodes. Although FIG. 1 shows a communication network that includes an enterprise femtocell in an office building, similar communication networks may include femtocells located in residences or public spaces, such as a shopping mall. In some embodiments, macro base stations can transmit and receive on one or many frequency channels that are separate from one or many frequency channels used by small form factor (SFF) base stations in the same area. In other embodiments, the macro base stations and the SFF base stations can share the same frequency channels. Various combinations of geography and channel availability can create a variety of interference scenarios that can impact the throughput of the communications system.

When a terminal node (such as one of the subscriber nodes 150) wishes to begin a new service (or add to an existing service), the terminal node requests this service from the network node that it communicates with. Using the terminology of LTE, a user equipment may request to establish a bearer with an evolved Node B (eNB). Prior systems have responded to such a request with an admit or deny decision. Additionally, prior systems have made admission control decisions with little information about how the terminal will use the requested service. In prior systems, admission control responses have typically been based on a class of service requested.

Access devices in the communication network of FIG. 1 (such as the macro base station 110, the pico station 130, or the enterprise femtocell 140) can perform application-aware admission control. For example, an admission control response may take into account application classes (e.g., video, voice, video conferencing) and specific applications (e.g., Skype, YouTube, Netflix) associated with an admission request. An admission control response may also consider more detailed information such as resolution, frame rate, bit rate, and duration of an associated video. Application information can be determined by packet inspection. Additionally, admission control response may be made at multiple levels, for example, on individual heterogeneous sessions with a bearer. Furthermore, the admission control responses can include admit, deny, delay, or modify. Application-aware admission control can improve QoE for users.

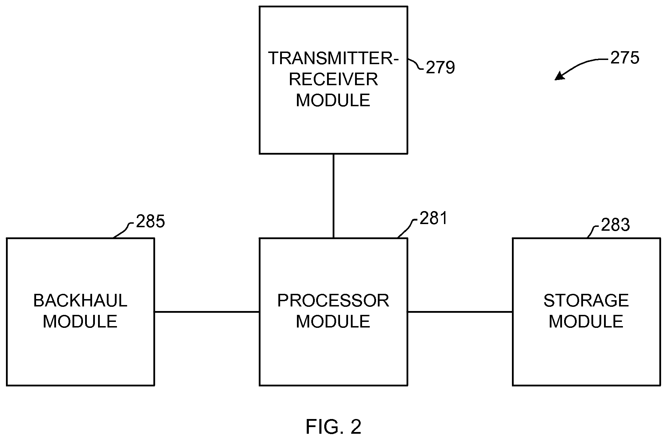

FIG. 2 is a functional block diagram of an access node 275 in accordance with aspects of the invention. In various embodiments, the access node 275 may be a mobile WiMAX base station, a global system for mobile (GSM) wireless base transceiver station (BTS), a Universal Mobile Telecommunications System (UMTS) NodeB, an LTE or LTE Advanced evolved Node B (eNB or eNodeB), a cable modem head end, or other wireline or wireless access node of various form factors. For example, the macro base station 110, the pico station 130, or the enterprise femtocell 140 of FIG. 1 may be provided, for example, by the access node 275 of FIG. 2. The access node 275 includes a processor module 281. The processor module 281 is coupled to a transmitter-receiver (transceiver) module 279, a backhaul interface module 285, and a storage module 283.

The transmitter-receiver module 279 is configured to transmit and receive communications with other devices. In many embodiments, the communications are transmitted and received wirelessly. In such embodiments, the access node 275 generally includes one or more antennae for transmission and reception of radio signals. In other embodiments, the communications are transmitted and received over physical connections such as wires or optical cables. The communications of the transmitter-receiver module 279 may be with terminal nodes.

The backhaul interface module 285 provides communication between the access node 275 and a core network. The communication may be over a backhaul connection, for example, the backhaul connection 170 of FIG. 1. Communications received via the transmitter-receiver module 279 may be transmitted, after processing, on the backhaul connection. Similarly, communication received from the backhaul connection may be transmitted by the transmitter-receiver module 279. Although the access node 275 of FIG. 2 is shown with a single backhaul interface module 285, other embodiments of the access node 275 may include multiple backhaul interface modules. Similarly, the access node 275 may include multiple transmitter-receiver modules. The multiple backhaul interface modules and transmitter-receiver modules may operate according to different protocols.

The processor module 281 can process communications being received and transmitted by the access node 275. The storage module 283 stores data for use by the processor module 281. The storage module 283 may also be used to store computer readable instructions for execution by the processor module 281. The computer readable instructions can be used by the access node 275 for accomplishing the various functions of the access node 275. In an embodiment, the storage module 283 or parts of the storage module 283 may be considered a non-transitory machine readable medium. For concise explanation, the access node 275 or embodiments of it are described as having certain functionality. It will be appreciated that in some embodiments, this functionality is accomplished by the processor module 281 in conjunction with the storage module 283, transmitter-receiver module 279, and backhaul interface module 285. Furthermore, in addition to executing instructions, the processor module 281 may include specific purpose hardware to accomplish some functions.

The access node 275 can perform application-aware admission control. For example, an admission control response may take into account application classes and specific applications associated with an admission request. An admission control response may also consider more detailed information such as resolution, frame rate, bit rate, and, duration of an associated video. Application information can be determined by packet inspection. Additionally, admission control responses may be made at multiple levels, for example, on individual heterogeneous sessions within a bearer. Furthermore, the admission control responses can include admit, deny, delay, or modify.

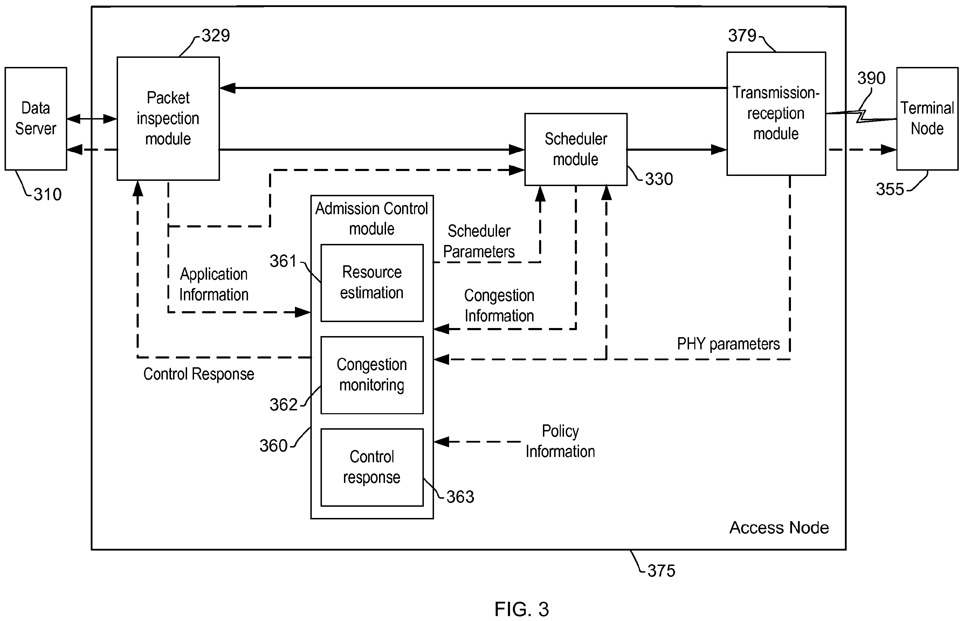

FIG. 3 is a diagram of a communication system illustrating aspects of an access node 375 in accordance with aspects of the invention. The access node 375 can use application information and congestion information to make session admission decisions. The access node 375 facilitates communication between a terminal node 355 and a data server 310. The data server 310 may be, for example, in a video content delivery network. The macro base station 110, the pico station 130, or the enterprise femtocell 140 of FIG. 1, in some embodiments, is implemented using the access node 375. The access node 375 may be implemented, for example, using the access node 275 of FIG. 2. Communication of access node 375 with the data server 310 may be via a core network, a service provider network, the Internet, or a combination of networks. To aid understanding, solid lines in FIG. 3 represent user data and dashed lines represent control data.

The access node 375 includes a packet inspection module 329, a scheduler module 330, and a transmission-reception module (transceiver) 379. The packet inspection module 329, the scheduler module 330, and the transmission-reception module 379 are used by the access node 375 in communicating with the terminal node 355. The transmission-reception module 379 provides communications with the terminal node 355. The transmission-reception module 379 may, for example, implement a radio access network physical layer. The transmission-reception module 379 may be similar to or the same as the transmission-reception module 279 of FIG. 2. The access node 375 of FIG. 3 also includes an admission control module 360 that is responsible for various aspects of admission control.

The admission control module 360 controls access to a channel 390 that is used for communication with the terminal node 355. The channel 390 is capacity constrained. Thus, the terminal node 355 (and other terminal nodes that may also communicate with the access node 375) may request more bandwidth than is available. The admission control module 360 can determine control responses to admission requests using application information. Accordingly, the access node 375 may be said to provide application-aware admission control. Application-aware admission control can provide improved communication system performance, for example, improved QoE for the user of the terminal node 355.

An admission request may, for example, be a request for a service, a session, a bearer, or a connection. An application may include multiple admission requests, for example, admission requests for each of multiple fragments of a streaming video or a video request and an audio request for an interactive voice plus video session. Some admission requests explicitly involve the access node as part of the process. For example, the access node in an LTE system may receive an admission request on a control channel to set up a bearer. Other admission requests may not explicitly involve the access node. A terminal node making such an admission request may not be aware that the access node For example, a terminal node may direct an admission request for a fragment of a streaming video to a video server. Although the admission request may be communicated via the access node, the terminal node did not direct the admission request to the access node and the terminal node may not be aware that the access node may detect and respond to the admission request. The access node may detect admission requests by various methods that may vary with characteristics of the admission requests. The access node may, for example, detect some admission requests by receiving explicit messages directed to the access node and detect other admission requests by inspecting packets that are not explicitly directed to the access node.

The packet inspection module 329 is in a data path between the data server 310 and the terminal node 355. In the downlink direction, the packet inspection module 329 receives data from the data server 310 and decides what to do with the data. For example, user data bound for the terminal node 355 may be segregated into queues at the scheduler module 330 for transmission to the terminal node 355 via the transmission-reception module 379. The queues may reside, for example, in the storage module 283 of the access node of FIG. 2. The segregation into queues may be based on various characteristics associated with the user data, such as logical link, IP source and destination addresses, application class, or specific application. The packet inspection module 329 may receive the downlink packets via a backhaul interface module, for example, the backhaul interface module 285 of FIG. 2.

The transmission-reception module 379 also receives packets from the terminal node 355. Some of these uplink packets may be control packets that the access node 375 relays to the data server 310. Control packets may be destined for a control mechanism in the data server 310.

Packets from the data server 310 are received by the packet inspection module 329. While the packets may contain both data and control information from the point of view of the data server 310 and the terminal node 355, the packets are viewed as data packets by the access node 375 and are, therefore, referred to as data packets herein. The packet inspection module 329 inspects the data packets. Information regarding the data packets is determined and may be forwarded, for example, to the admission control module 360 and the scheduler module 330. The information may include information such as bit rates, session durations, application classes, specific applications, and destination terminal nodes. The packet inspection module 329 can also inspect uplink packets. The inspection may include data packets carrying content (e.g., video, email, audio) or may include packets that are used to initiate a session. The packet inspection module 329 may use methods and systems for packet inspection that are described in detail in U.S. patent application Ser. No. 13/607,559, filed Sept. 7, 2012 and titled "Systems and Methods for Congestion Detection for use in Prioritizing and Scheduling Packets in a Communication Network,".

As an example of packet inspection, the access node 375 may provide communication between a video client at the terminal node 355 and a video content delivery service at the data server 310. Data packets containing control information may be generated by the video client to query the video content delivery service for information regarding a particular video or command the video content delivery service to initiate transmission of a video. The packet inspection module 329 inspects the two-way exchange of data packets between the video client and the video content delivery service. From the inspected data packets, the packet inspection module 329 can determine that a video session is being initiated. The packet inspection module 329 can then send information about the video session to the admission control module 360. In a variant of this example, the packet inspection module 329 detects initiation of the video session by inspecting only uplink packets, for instance, by detecting the initiation of a transmission control protocol (TCP) connection via detection of a SYN (synchronize sequence numbers) message sent from the video client to the video content delivery service with a known IP address.

The transmission-reception module 379 will typically communicate with the terminal node 355 using a particular physical layer operating mode, such as a modulation and coding scheme. The physical layer operating mode can be chosen based upon link quality metrics measured with respect to the channel 390 between the access node 375 and the terminal node 355. The link quality metrics may be determined by the transmission-reception module 379. The link quality metrics may also be determined by a transceiver in the terminal node 355 or combination of the functions at the access node 375 and the terminal node 355. Example link quality metrics include signal-to-noise ratio (SNR), received signal strength indicators (RSSI), carrier-to-interference-plus-noise ratio (CINR), bit error rate (BER), and retransmission counts.

The scheduler module 330 implements some or all of the functionality required to allocate physical resources across the communication link between the access node 375 and the terminal node 355. The scheduler module 330 is typically associated with or part of a medium access control (MAC) layer. For the downlink direction, the scheduler module 330 decides which data to transmit and at what point in time. The resources may be allocated, for example, as subcarriers and timeslots. When excessive congestion occurs, the scheduler module 330 may discard some packets. The scheduler module 330 may also process uplink resource requests from the terminal node 355 and grant uplink bandwidth. The scheduler module 330 may use physical layer (PHY) information from the transmission-reception module 379, such as modulation and coding scheme, to determine the amount of resources to allocate to specific user data.

The scheduler module 330 may inform the admission control module 360 of congestion occurring on the channel 390. The scheduler module 330 may also receive updates to scheduler parameters, such as changes to weights and credits, from the admission control module 360. The scheduler module 330 can provide a variety of information to the admission control module 360. The information can include information indicative of congestion, such as discard rates, buffer egress rates, packet aging, and buffer occupancy.

The admission control module 360 includes a resource estimation module 361, a congestion monitoring module 362, and a control response module 363. The modules of the admission control module 360 communicate with the packet inspection module 329, the scheduler module 330, and the transmission-reception module 379 to provide application-aware admission control.

The control response module 363 may create control responses to admit, deny, delay, or modify admission requests. The responses may affect requests at multiple levels, for example, logical links, connections, session, streams. The control response module 363 may create the control responses using various information, for example, policies, service level agreements, resource estimates, congestion indicators, and information about applications.

The resource estimation module 361 estimates resources available for communication. The estimates can be made for uplink and downlink communication and for individual or groups of terminal nodes. The resource estimation module 361 may use channel characteristics and PHY parameters, such as modulation and coding, to estimate the expected resource available. The resource estimation module 361 may estimate resources in various units. The resource estimation module 361 may, for example, estimate resources in terms of bits per second, symbols per second, or resource blocks per frame. Any excess in resources may be either allocated in support of new sessions which may be admitted, or allocated to increase the resources of currently active sessions. An excess of resources may similarly be applied to logical bearers with each logical bearer containing one or more sessions, and terminal nodes containing one or more bearers.

The transmission-reception module 379, in addition to facilitating uplink and downlink data transfer, may monitor or maintain physical layer (PHY) parameters and status, such as modulation, coding, and signal-to-noise ratio (SNR) associated with communication with the terminal node 355. Capabilities of the access node 375 to communicate with terminal nodes depend in part on the PHY parameters and status. Information about PHY parameters and status may be made available to the scheduler module 330 to make scheduling decisions and to the admission control module 360 to determine admission control responses.

The physical layer operating mode effects how much of the capacity of the channel 390 is necessary to transmit a given quantity of data. For example, if all other physical layer mode parameters are the same, if communication between the access node 375 and the terminal node 355 uses quadrature phase shift key (QPSK) modulation, it will require three times as much of the capacity of the channel 390 compared to if the communication uses 64-level quadrature amplitude modulation (64-QAM). In an embodiment, the admission control module 360 receives the current physical layer operating mode of the terminal node 355 (and other terminal nodes) and calculates available system capacity as a function of the physical layer operating modes and the data rate needs, commitments, or demands of the operating services. As physical layer operating modes change, for example, due to mobility, or as the data rate needs or commitments for the various services change, the admission control module 360 updates the estimated resource capacity, resource demand, and resource excess or shortfall.

The congestion monitoring module 362 monitors the current state of congestion. The congestion monitoring module 362 may use information from the scheduler module 330 to determine congestion. For example, an increase in buffer occupancy or a decrease in buffer egress rate can indicate congestion. The congestion monitoring module 362 can use application information from the packet inspection module 329 to determine demand for communication. The congestion monitoring module may also compare the demand for communication to the estimated resource capacity from the resource estimation module 361 to determine congestion. The congestion monitoring module 362 may also maintain historical congestion information that may be used in predicting congestion.

If the current resource capacity estimation is less than demand, the congestion monitoring module 362 determines that the channel 390 is currently congested. In addition, the congestion monitoring module 362 may monitor the depth (occupancy) of queues or buffers used to store data for scheduling, discard rates, egress rates, or other metrics provided by the scheduler module 330 when determining congestion. When a queue reaches a capacity threshold, or when a queue overflows, congestion is considered to be occurring. Once the queue occupancy drops below a capacity threshold, congestion is considered to no longer be occurring. Similarly egress rates, or the rate at which queues are being emptied, can be used to determine congestion. For example, if the egress rate is slower than the rate at which a queue or buffer is filling, congestion is likely. The congestion monitoring module 362 may also use information about a discard rate from the scheduler module 330 to determine whether congestion is present. The acceptable level of discard may vary with characteristics of the application associated with the discarded packets.

A particular terminal node may have capacity constraints that are independent of or in addition to the capacity constraints of the channel 390. For example, a terminal node may be constrained by a service level agreement that limits the maximum bandwidth for a user of the terminal node. The scheduler module 330 may intentionally limit capacity allocated to a terminal node experiencing poor communication channel conditions. Such a technique can be used to improve the aggregate channel capacity servicing multiple users. Alternatively or additionally, a policy may dictate that an individual terminal node receive at most a certain percentage of the capacity of the channel 390. The percentage could, for example, be weighted by the number of active terminal nodes or some other criteria. Another policy may dictate that an individual terminal node be allowed at most a certain number of simultaneously active TCP connections. In these and similar cases, congestion may be defined as congestion of the channel 390, congestion of an individual terminal node's allotted capacity, exceeding allowable number connection limits, or a combination of criteria.

The congestion monitoring module 362, in an embodiment, may predict the probability of future congestion based upon extrapolation of trends or use of historical data. For instance, if signal quality from the terminal node 355 is degrading (e.g., the terminal node may be moving away from the access node or there may be an increase in interference in the channel), the congestion monitoring module 362 may predict an increase in congestion with respect to communication between the terminal 355 and the access node 375.

The congestion monitoring module 362 may predict congestion changes, including both worsening and lessening of congestion. The admission control module 360 can proactively take actions responsive to the predicted congestion changes. Taking proactive actions can minimize quality degradation that would occur if no action was taken until congestion actually occurs.

The congestion monitoring module 362 can use many factors to predict congestion. For examples, historical data may indicate that congestion typically worsens at a particular time of day in a cell. Tracking streaming video data transmitted versus time and comparing the results to the size of the corresponding file may indicate the size of the remainder of a streaming video as well as the time period over which the remainder must be transmitted to avoid quality impairments. This knowledge may be used to manage congestion. A terminal node's signal quality may be changing in a way that suggests future improvement or degradation sufficient to cause a change in modulation and coding or a change in the number of retries, either within the wireless protocol (e.g., HARQ retransmissions) or the transport protocol (e.g., TCP retransmissions).

The control response module 363 can provide admission control responses using congestion information from the congestion monitoring module 362. The control response module 363 may make admission control response decisions taking into account application information from the packet inspection module 329. The control response module 363 may base admission control on the predicted future state of congestion rather than the current state of congestion. For example, if congestion is expected to worsen, the control response module 363 may more aggressively deny or modify services compared to what the control response module 363 would do based on just the current state of congestion. Conversely, the control response module 363 may less aggressively deny or modify services if congestion is expected to lessen.

In an example embodiment, the access node 375 is an eNodeB in an LTE radio access network (RAN). In an LTE system, an eNodeB may implement admission control, determining whether there is capacity to admit a user equipment (UE) (e.g., the terminal node 355) or a particular data radio bearer (DRB) for a UE. Some DRBs have an associated guaranteed bit rate (GBR) and maximum bit rate (MBR). Other DRBs do not have a GBR and MBR but must operate collectively within an aggregate maximum bit rate (AMBR) allotted to the UE. Some DRBs may be dedicated to an individual service, such as an operator-controlled voice over LTE (VoLTE) service. Other DRBs may carry multiple simultaneous heterogeneous services, such as simultaneous email and YouTube video. Additionally, to aid in preempting one service to allow another service, LTE provides allocation and retention priority parameters for DRBs. The access node 375 may use the GBRs, MBRs, and AMBRs in conjunction with current or predicted modulation and coding rates and operator policy in making control response decisions. Example operator policies include oversubscription policies, service level agreements, and allocation and retention priorities. Such policies may be universal and apply to all users in a network. Alternatively, different policies may be applied to groups of users or individual users within a network.

When the admission control module 360 detects congestion on the channel 390 or in a portion of the channel 390 for the terminal node 355, it may take various actions (control responses). For example, the admission control module 360 may suspend or modify existing services. If a new service is requested, the admission control module 360 may deny the new service or admit it with modified service parameters.

When a new terminal node enters the network or the terminal node 355 initiates setup of a new data bearer, the admission control module 360 determines a response. Each new terminal node or data bearer creates demands on the system. In addition to communication bandwidth, the new terminal node or data bearer may increase demand on computing resources at the access node 375. The demands on computing resources may scale with the number of terminal nodes and data bearers. Similarly, minimum bandwidth requirements may also scale with the number of terminal nodes and data bearers. For example, a terminal node will require some basic amount of bandwidth (e.g., for control signaling). Additionally, the terminal node will often enter the system with a default bandwidth (e.g., the bandwidth for a default bearer in an LTE network). Based on existing bandwidth assignments (e.g., GBR, MBR, AMBR), oversubscription policy, and current or predicted modulation and coding, the admission control module 360 can determine whether the new terminal node or bearer can be allowed while staying within policies regarding oversubscription and congestion levels. The admission control module 360 may also base admission control decisions on the service or mix of services transported on a bearer.

In another example, the services that access node 375 transports include VoLTE and interactive video combined with VoLTE. The packet inspection module 329 may detect the VoLTE services by detecting IP multimedia subsystem (IMS) signaling during the setup of the VoLTE services. The packet inspection module 329 can, in an embodiment, detect the VoLTE services even when the IMS signaling is encrypted. The packet inspection module 329 may, for example, detect IMS signaling between the core network and the terminal node 355, followed shortly (e.g., within several seconds) thereafter by creation of a bearer with a bit rate consistent with voice (e.g., 32 kilobits per second). The packet inspection module 329 can infer from this information that a VoLTE session was initiated on the new bearer. The admission control module 360 may use this information from the packet inspection module 329 to make admission control decisions. If a bearer with a bit rate consistent with video (e.g., 500 kilobits per second) and a bearer with a bit rate consistent with voice (or audio) are established with a certain temporal relationship (e.g., within several seconds) to detected IMS signaling, the packet inspection module 329 may infer that the combination represents an interactive voice plus video session. The admission control module 360 can, based on the voice portion of the interactive voice plus video session being generally considered more important to the user's quality of experience than the video portion, prioritize the voice bearer over the video bearer when making admission control decisions. Similarly, the admission control module 360 may deem the video portion of the interactive voice plus video session to be a lower priority than other video bearers, such as video on demand, while the voice portion of the interactive voice plus video session is given a higher priority.

The packet inspection module 329 may, for example, determine that a new video service is being initiated on an existing data bearer. The packet inspection module 329 may further determine an expected bit rate of the new video service. The admission control module 360 can use the expected bit rate to determine whether there will be degradation to the new video service or other services if the new video service is allowed. The packet inspection module 329 may detect bit rates of services in a number of ways. The bit rates may be estimated by observing the flow of data for the service over a period of time, for example, by summing the total number of data bytes associated with a service and dividing by the period of time over which the summation is performed. The bit rates may be determined from packets that set up the service. For example, the packet inspection module 329 may inspect the HTTP request and response for starting a YouTube video, which describe the data rate and size of the video. In an embodiment, the packet inspection module 329 may detect the presence of the HTTP video streaming session and retain copies of playlist or manifest files. In an embodiment, the packet inspection module 329 may estimate the bit rate of the data stream for some period of time by detecting which fragments of the data stream a client requests to fetch and actual times spent transferring these fragments. The admission control module 360 can use the bit rate information in determining admission control responses. For example, the admission control module 360 may assess whether there are sufficient resources to meet quality requirements of a currently active set of services, for example, whether there are sufficient resources to support stall-free playback of a video.

The admission control module 360 can make admission control responses that avoid adverse impacts on system performance, including impacts on QoE. Information about bit rates, modulation and coding, and oversubscription policy can be used to avoid adverse impacts. For instance, the modulation and coding can be used to determine how many bits are available to transmit user data in a unit (e.g., a resource block in LTE) of resource allocation. For example, an oversubscription policy may allow the admission control module 360 to accept sessions representing a higher total bandwidth than is actually available. This may happen due to knowledge that many sessions will not use the entirety of their allowed resources. For instance, in LTE a VoLTE connection may be established that includes a GBR assignment made prior to knowing which audio codec will be used. Thus, the GBR may assume the worst case, i.e. the highest resolution and, therefore, the highest bit rate. However, the actual codec used may be more efficient (lower bit rate) and not consume all assigned bandwidth. Additionally, the use of silence suppression techniques may further reduce the actual bit rate below the maximum bit rate. The packet inspection module 329 may detect that a service is using less bandwidth than initially budgeted. This information may allow the admission control module 360 to oversubscribe the guaranteed resource commitments of the channel 390. The admission control module 360 may also use policy inputs in making oversubscription decisions.

The admission control module 360 may, alternatively or additionally, determine availability of sufficient resources and indications of congestion from parameters. Example parameters include buffer occupancy, buffer egress rates, discard rates, and observed or estimated video or audio quality metrics, such as video stalls. The parameters may be derived from currently or recently active services. If the admission control module 360 determines that sufficient resources exist for a new session, the new session may be admitted. If the admission control module 360 determines insufficient resources exist, a control response must occur to mitigate the oversubscription.

One control response the admission control module 360 may make to mitigate oversubscription is denial of the new service. When the new service is to be started on an already existing bearer, the control response cannot be as simple as denying creation of a bearer. In an embodiment, the control response may be to discard or replace some of the session initiation packets, thereby overcoming the ability of the session protocol to initiate the session.

The response may include discarding one or more packets related to the service request and sending a substitute message back to the service initiator. For example, an HTTP GET command issued by the terminal node may be identified by the packet inspection module 329 and held. Due to congestion conditions, the admission control module 360 may create a control response to discard the service request. Additionally, the control response may create and send a substitute message to the scheduler module 330 which in turn sends the message to the terminal node. The substitute message, for example, may be an HTTP 413 Request Entity Too Large message, HTTP 500 Internal Server Error message, HTTP 503 Service Unavailable message, or HTTP 504 Gateway Timeout message. These messages may include a Retry-After parameter to signal a waiting period before the client should attempt to reinitiate the session, creating a control response to delay rather than deny the service. The Retry-After parameter may be set to a constant value or may be set depending on the severity congestion (current, predicted future congestion, or combination of congestion levels). Additionally or alternatively, a substitute message may have the TCP reset flag, a field within a TCP header, set to a value of 1, thereby initiating a closing of the underlying TCP connection.

Alternatively, the response may include replacing a message accepting a service request with a message rejecting the service request. More specifically, if a client in the terminal node 355 is requesting a video clip using an HTTP GET command, the packet inspection module 329 may identify the HTTP 200 OK message issued from the data server 310. In response, the admission control module 360 may create a control response to discard the message, replace it with a substitute message, and close the TCP connection. For instance, the admission control module 360 may signal the packet inspection module 329 to detect and discard the HTTP 200 OK message and pass an HTTP 413 Request Entity Too Large message, HTTP 500 Internal Server Error message, HTTP 503 Service Unavailable message, or HTTP 504 Gateway Timeout message to the scheduler module 330 in its place. These messages may include a Retry-After parameter to signal a waiting period before the client should attempt to reinitiate the session, creating a control response to delay rather than deny the service. The Retry-After parameter may be set to a constant value or may be set depending on the severity congestion (current, predicted future congestion, or combination of congestion levels). A substitute message may have the TCP reset flag set to a value of 1, thereby initiating a closing of the underlying TCP connection. A second substitute message may also be created by the access node 375 and sent to the data server 310 to terminate any data transmissions related to the original terminal node request. The second substitute message may have the TCP reset flag set to a value of 1, thereby initiating a closing of the underlying TCP connection.

In another example, the decision to delay or deny the service may be made after one or more message transactions have been successfully completed between the terminal node 355 and the data server 310. For example, the admission control module 360 may create a control response to delay or terminate the service after determining the application class or specific application of the service. Alternatively, a service may be delayed or terminated after the access node 375 determines the necessary resources required to support the service. For example, a streaming video service may be denied once it is determined that the average bitrate exceeds the available system capacity.

In another example, if a client in the terminal node 355 starts an RTSP streaming session, the packet inspection module 329 may identify the RTSP messages transferred between the server and the client. When the admission control module 360 decides to deny a service, it may create a control response to change the status of RTSP response message corresponding to RTSP request message with SETUP method from 200 (OK) to 453 (Not Enough Bandwidth).

The admission control module 360 may also create a control response to deny the setup of a TCP connection. For example, if the number of TCP connections allowed for a terminal node is exceeded, the admission control module 360 may prevent setup of another TCP connection for that terminal node. The packet inspection module 329 may inspect packets to identify the setup of a TCP connection via detection of the packets used for TCP establishment (e.g., SYN, SYN-ACK, ACK) between a TCP client and a TCP server. The admission control module 360 may create a control response to discard these messages if too many TCP connections have been established. Alternatively or additionally, the client (or the server) may be signaled to indicate the denial of service. The denial of service may be signaled by methods described in U.S. patent application Ser. No. 13/744,101, filed Jan. 17, 2013 and titled "Systems and Methods for Cooperative Applications in Communication Systems."

The system may choose to deny a service based on a variety of factors. For example, the system may base the decision on a new session's protocol (e.g., HTTP or FTP), application class (e.g., streaming video, conversational or two-way video, voice, internet browsing, peer-to-peer exchanges, gaming, or machine-to-machine exchange), or specific application (e.g., YouTube, Netflix, Facebook, FaceTime, Chrome, or BitTorrent). A service may be also denied based on the above methods in combination with user SLA or network policy.

The admission control module 360 may also create a control response to delay a new service. The new service may be delayed, for example, until the system estimates that there will be sufficient resources. For example, a YouTube video session's creation protocol can contain information, such as metadata, that allows the packet inspection module 329 to determine the size or duration of the YouTube video. Session durations may be similarly determined for other video streaming applications and for non-video sessions. The admission control module 360 can use the duration information, possibly combined with buffer occupancy and egress rates, to estimate when a video session may end and system resources may be freed. The admission control module 360 may delay a new service, for example, by delaying session initiation protocol packets or by signaling the application, client, or server to delay session initiation. Thus, the session can be delayed until sufficient resources are available. Delaying the session may provide a better user QoE than denying the session.

The admission control module 360 may also create a control response to modify a service so that the service will operate within the resources available. For example, in video applications, the server may send a list of video representations from which the client may choose. Each representation may have a different container file format, or a different video resolution, or a different bit rate. In an embodiment, the access node 375 may modify a list of possible representations in which a video is available. The possible representations can be modified to limit the list to those that will operate within the resources available.

Because video files are usually large, it can be desirable for a client to be able to start playing a video file before the whole video file is received. To make this possible, YouTube servers, for example, provide video content in popular container formats such as MP4, 3GP and FLV where video metadata may be stored in the beginning of the file. A YouTube client can start playing as soon as the video metadata and a small amount of the movie data are received. For each video, a YouTube server may provide multiple video representations with different URLs for the client to access. The YouTube server may signal the available representations in an XML content message. Example available video representations for a video clip are listed in the following table. In the URLs, the number after the "itag" field indicates a different video container file format and resolution available for the video clip. For example, the lines with itag=18 and itag=22 both indicate MP4 format, but with resolutions of 360p and 720p, respectively. In this case, a control response may be to intercept the XML content message, strip the higher data rate options that would cause congestion, and forward the modified message. This limits the client's choices to those for which sufficient resources exist. Content for other services and formats can be similarly modified.

| Type | URL |
| --- | --- |
| mp4 | http://redirector.c.youtube.com/videoplayback? id=7fb266ccf8e4e36c&itag=18... |
| 3gpp | http://redirector.c.youtube.com/videoplayback? id=7fb266ccf8e4e36c&itag=17... |
| x-flv | http://redirector.c.youtube.com/videoplayback? id=7fb266ccf8e4e36c&itag=5... |
| mp4 | http://redirector.c.youtube.com/videoplayback? id=7fb266ccf8e4e36c&itag=22... |
| 3gpp | http://redirector.c.youtube.com/videoplayback? id=7fb266ccf8e4e36c&itag=36... |

The admission control module 360 may also create a control response to change scheduling priorities or scheduling resource allocation. For example, scheduling priority or weight of a new session or the bearer carrying the new session may be increased, for example, to allow degradation of other services, which may be more delay or packet loss tolerant, in order to allow admission of the new session. Once the period of congestion has subsided, the degraded services may be processed in a non-degraded manner. The system may use scheduling methods described in U.S. patent application Ser. No. 13/607,559.

The admission control module 360 may also create a control response to admit a new session using each user's relative service level, for example, in combination with other methods. For example, if the new session is initiated by a user who has paid for a higher level of service (e.g., Gold service) as compared to the service levels of other currently served users (e.g., Silver service) the admission control module 360 may use the above methods to determine the control response. In contrast, the system may refrain from applying the above methods (e.g., a new service request is denied) if the new session is initiated by a user who has the same service level as those currently being served. Similar actions may be taken if the new session is initiated by a user who has a lower service level as those currently being served.

The admission control module 360 can initiate similar control responses when capacity is reduced. For example, capacity may be reduced when a terminal node moves away from the access node 375 and needs to operate with a more robust but less efficient modulation and coding scheme. In this case, the control response is not whether to admit or deny a device, data bearer, or individual session. Instead, the control response is whether to suspend, terminate, or modify communication with a device, a data bearer, or an individual session.

The admission control module 360 may make decisions to suspend or terminate, for example, based on service level agreements (e.g., using the priorities expressed or implied by these agreements) or allocation and retention priorities. The admission control module 360 may also make decisions to suspend or terminate based on knowledge of the applications being used. For instance, in the case of an interactive voice and video call, considering that the voice component is the more important to user quality of experience, the admission control module 360 may suspend the video portion during congestion while continuing the voice portion. The video portion could be resumed once congestion is alleviated. This may allow the interactive voice and video call to proceed at a greater level of user satisfaction than if substantial packet loss occurred on both the voice and video portions of the call.

The admission control module 360 may make decisions to modify a service. By modifying operational parameters associated with a service, the service may be preserved at a lower bandwidth. For example, the control response may be to reduce the resolution or data rate of a video service to lower the required bandwidth. A video scaling capability may exist at the data server 310 (or somewhere else in the system), and the admission control module 360 can send a request or command to the video scaling capability to scale the video stream to a reduced resolution. The system may use methods and modules described in U.S. patent application Ser. No. 13/644,650, filed Oct. 22, 2012 and titled "Congestion Induced Video Scaling."

The admission control module 360, in an embodiment, may trigger the video client or application at the terminal node 355 to request video with a different playback bitrate. The request may be to the data server 310 or to an intermediary video scaling capability. This method may be used, for example, when the admission control module 360 lacks the ability to directly command or make requests for video scaling. For example, rather than downloading an entire video file progressively with one HTTP GET request in one TCP connection, a client may use multiple HTTP requests on different TCP connections to download the video file in smaller fragments. The fragments may be of different sizes. This allows portions of the video to be requested using different parameters, including different playback bitrates. The admission control module 360 may communicate with the client and instruct it to request subsequent portions of the video at a different bitrate, for example, due to congestion. In an embodiment, the admission control module 360 may generate a control response to reduce the resources allocated to the video, thereby triggering the client to select a reduced data rate in compensation. Such a technique may also be used by clients employing adaptive streaming video protocols such as dynamic adaptive streaming over HTTP (DASH), Microsoft's Smooth Streaming, Apple's HTTP Live Streaming, or Adobe's Dynamic Streaming protocol.

Some video clients may contain logic that monitors the flow of received video data. The admission control module 360 can be aware of whether a particular video client is likely to react to alterations in video or other packet flow to request increased or decreased video rates. The admission control module 360 may be aware of how the video client is likely to react based on information from the packet inspection module 329. For example, the packet inspection module 329 may detect a DASH media presentation description (MPD) file on a particular logical bearer. Based upon this awareness, the packet inspection module 329 may infer that a subsequent video playback session on the same bearer will use a video client which may react to alterations in packet flow. When the video client is likely to react beneficially, the admission control module 360 may constrain the flow of video to the client and trigger the client to request a lower data rate. Conversely, the admission control module 360 may cause the flow of video to the client to be increased to trigger the client to request the video at an increased rate.

Additionally, the packet inspection module 329 may extract detailed information contained in the video metadata, such as information contained in an MPD file describing the allowable video playback bitrates (or bitrate representations) for a video session. This information may be used to quantify a control response to reduce or increase resource allocation sufficiently to trigger the desired client behavior. For example, consider a case where the control response module 363 is informed by the packet inspection module 329 that representations of a user initiated video are available at 256, 768, and 1024 kbit/s. If previous resource allocation to the client is sufficient to allow the 1024 kbit/s representation, but congestion has recently (or is predicted to) increase modestly, then a control response may instruct the scheduler module 330 to allocate system resources sufficient to support up to a 768 kbit/s representation. If congestion has recently (or is predicted to) increase substantially, then a control response may instruct resource allocation sufficient to support only the 256 kbit/s representation.

Alternatively, the client (or application) at the terminal node 355 may have a control path for communication with the access node 375. The admission control module 360 may use the control path to command or request the client to change the data rate that it is using. For example, admission control module 360 may inform the client of a data rate that can be delivered reliably. The date rate may be based, for example, on resource capabilities and demand estimates from the resource estimation module 361 and the congestion monitoring module 362.

When the admission control module 360 signals the terminal node 355 to change a data rate, the packet inspection module 329 may inspect packets to determine if the data rate is being changed. For example, the packet inspection module 329 may inspect packets for messages from a video client that indicate that the client is changing its data rate. In an example, if the video client has not requested a reduced video data rate, the admission control module 360 may take further action such as repeating the request or suspending the session.

Although FIG. 3 illustrates single instances of each element, in an embodiment, there may be multiple instances of various elements. For example, the access node may concurrently communicate with multiple terminal nodes and with multiple data servers. The data servers may provide services for diverse data types. Additionally, there may be intermediary devices between the access node 375 and the data server 310 and the terminal node 355. Moreover, FIG. 3 illustrates a particular allocation of functions to various modules and a particular distribution of modules in various communication nodes. Many other arrangements may also be used. For example, all or parts of the packet inspection module 329 and the admission control module 360 could be in a gateway node in the core network, for example, in a serving gateway (S-GW) or a packet gateway (P-GW) in an LTE network.

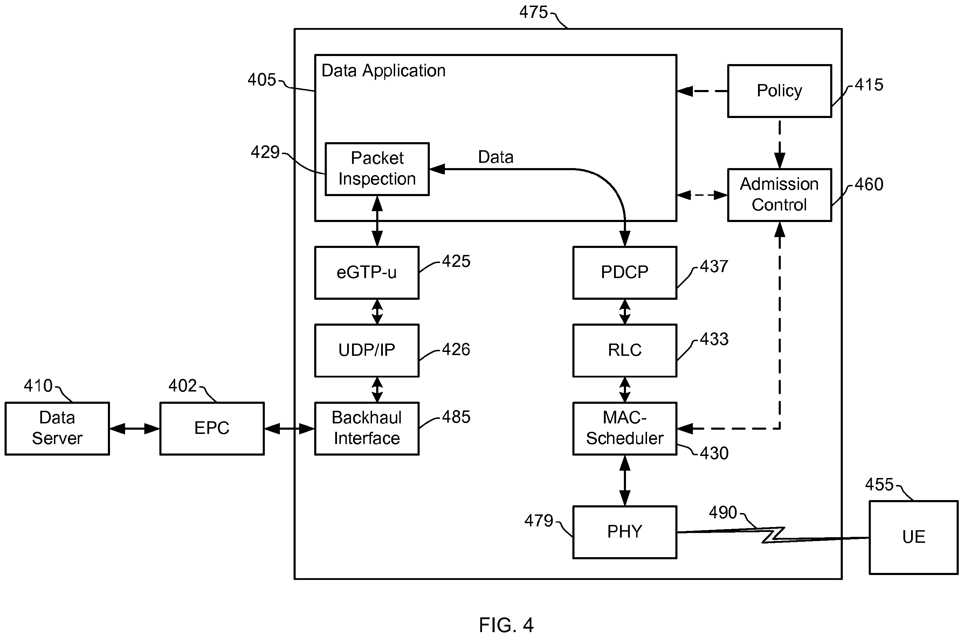

FIG. 4 is a diagram of a communication system illustrating aspects of an eNodeB 475 in accordance with aspects of the invention. The eNodeB 475 can detect congestion and application information and use the information to make admission control responses. The eNodeB 475 facilitates communication between a user equipment 455 and a data server 410. The macro base station 110, the pico station 130 or the enterprise femtocell 140 of FIG. 1, in some embodiments, is implemented using the eNodeB 475. The eNodeB 475, in various embodiments, may be the same as or similar to the access node 275 of FIG. 2 and the access node 375 of FIG. 3. To aid understanding, solid lines in FIG. 4 represent data paths for uplink and downlink data packets, for example, data, such as video, from the data server 410 to the user equipment 455. Dashed lines represent internal control paths. There may also be control messages on the uplink and downlink data paths. Further, there are other control paths not shown in FIG. 4.

The data server 410, in the embodiment shown in FIG. 4, is coupled to the eNodeB 475 via an evolved packet core (EPC) 402. The data server 410 may communicate with the EPC 402 via the Internet. The data server 410 could reside in many parts of the network. The EPC 402 may contain a packet gateway (P-GW) and a serving gateway (S-GW). The two gateways may be combined into a single device. In an embodiment, an additional femtocell gateway may be in the data path between the data server 410 and the user equipment 455.

The data server 410 is a source of content data packets. The data server 410 may, for example, be a video source such as Netflix or YouTube that is independent of the operator of the wireless network. Alternatively, the data server 410 may be a server in an operator controlled video content delivery network (CDN) that, for example, provides video on demand (VOD) or other video services. The data server 410 may consist of multiple servers, arranged in a cluster or cloud, one or more of which may provide video segments to a single video client and session. The data server 410 may also provide voice services. The voice services could, for example, be voice over LTE (VoLTE) or a voice over Internet protocol (VoIP) service such as Skype.

The eNodeB 475 receives data from the EPC 402 via a backhaul interface module 485. The backhaul interface module 485 can include a physical interface and protocol stack layers. The protocol stack layers may include an Internet protocol layer 426 and an evolved general packet radio service (GPRS) tunneling protocol (eGTP) layer 425.

The eNodeB 475 includes a packet inspection module 429 that receives data packets and inspects the packets. The inspection can detect the presence of application classes (e.g., video, voice, etc.) and of specific applications (e.g., YouTube, Netflix, etc.). In the eNodeB of FIG. 4, the packet inspection module 429 is part of a data application module 405. The data application module 405 may also provide other functions such as mapping tunnels to data radio bearers (DRB). The packet inspection module 429 may also map logical data paths from the core network to particular user equipments to allow the eNodeB 475 to determine the destinations for downstream packets.

The data application module 405 forwards packets to an air interface stack for transmission. The air interface stack typically includes multiple layers. A Packet Data Convergence Protocol (PDCP) layer 437 is generally responsible for encryption, header compression, and queuing of packets. A Radio Link Control (RLC) layer 433 is generally responsible for segmentation and reassembly. In some embodiments the RLC layer 433 also de-queues packets or fragments of packets for transmission over the air. A Media Access Control layer (MAC)-scheduler module 430 determines which DRBs will receive air interface resources and also determines which resources to use. The MAC-scheduler module 430 passes data from the chosen DRBs from the RLC layer 433 to the physical layer (PHY) module 479. The PHY module 479, in various embodiments, may be the same as or similar to the transmitter-receiver module 279 of FIG. 2. The PHY module 479 transmits the downlink data across a capacity constrained channel 490 to the user equipment 455.

The MAC-scheduler module 430 may receive information from the PHY module 479 regarding signal quality of the transmissions from the user equipment 455 to the eNodeB 475. The MAC-scheduler module 430 also receives information derived from reports transmitted by the user equipment 455 regarding the signal quality of the transmissions from the LTE eNodeB 475 to the user equipment 455 (and each of other user equipments when present). The MAC-scheduler module 430 uses this information to determine the PHY transmission modes to and from the user equipment 455. The PHY transmission mode determines the quantity of resources of the capacity constrained channel 490 necessary to transmit data to the user equipment 455.

The MAC-scheduler module 430 may also monitor buffer occupancy (i.e., quantity of data queued) and other parameters (e.g., discard rate) for each DRB or user equipment. The PHY transmission modes and the buffer occupancy can be used to determine whether there is congestion. Alternatively, packet discard (e.g., due to buffer or queue overflow), the length of time a packet resides in a queue prior to transmission, or other metrics may be used to determine congestion. The MAC-scheduler module 430 indicates congestion information to an admission control module 460.

The admission control module 460 can determine when a new user, DRB, or session may be allowed using the congestion information, resource estimation, information about bandwidth guarantees, and other information. The admission control module 460 may also determine what actions to take when congestion is detected. For instance, the admission control module 460 may suspend or deactivate a DRB, or the admission control module 460 may determine that a particular DRB must reduce its resource consumption. The admission control module 460 may consider input from a policy module 415 when making its determinations. The admission control module 460 may also receive and consider information from the data application module 405. For example, the admission control module 460 can use application information from the packet inspection module 429 to provide application-aware admission control responses.

Although FIG. 4 illustrates single instances of each element, in an embodiment, there may be multiple instances of various elements. For example, the eNodeB may concurrently communicate with multiple user equipments and with multiple data servers. The data servers may provide services for diverse data types. Additionally, there may be additional intermediary devices between the eNodeB 475 and the data server 410 and the user equipment 455. Moreover, FIG. 4 illustrates a particular allocation of functions to various modules and a particular distribution of modules in various communication nodes. Many other arrangements may also be used. For example, some functions of the MAC-scheduler module 430 could be performed in other layers or modules such as the PDCP layer 437 or the RLC layer 433, or inside the data application module 405. Further, parts of the packet inspection module 429 and the admission control module 460 could be in the EPC 402. Also, the eNodeB may also provide many other functions, such as supporting mobility and self-organizing networks.

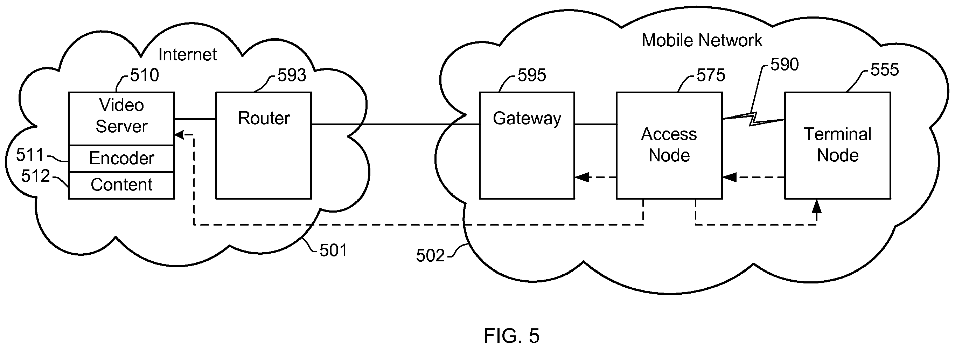

FIG. 5 is a block diagram of a communication system with application-aware admission control in accordance with aspects of the invention. A terminal node 555 communicates with a video server 510 to facilitate providing video to a video client at the terminal node 555. Various elements of the communication system may be the same or similar to like named elements described above.

The terminal node 555 in the communication system shown in FIG. 5 communicates with an access node 575 over a channel 590. The access node 575 is connected to a gateway node 595. The gateway node 595 provides access to the Internet via connectivity to a router node 593. The router node 593 provides access to the video server 510. Video passes from the Internet 501 to the mobile network 502 via the gateway 595 which transfers the video to the access node 575.

The video server 510 stores video content 512. The video server 510 may provide video content 512 to a video encoder 511. The video encoder 511 encodes the video for use by the video client at the terminal node 555. The video encoder 511 may encode the video content 512 as it is streamed (e.g., for live streaming events) or may encode the video in advance for storage and later streaming. The video encoder 511 may encode the video in different formats, profiles, or quality levels, for example, formats with different data rates. The format, profile, or quality level streamed can be switched while streaming. The different formats, profiles, or quality levels can be stored in advance or generated while streaming. The video server 510 provides video clients with access to the encoded video.

The access node 575 controls the transmission of data to and from the terminal node 555 via the channel 590. Accordingly, the access node 575 may include an admission control module, a scheduler module, and a transmission-reception module. The access node 575 may also include a packet inspection module. Alternatively, the gateway 595 includes a packet inspection module.

The access node 575, similar to the access node 375 of FIG. 3, monitors congestion on the channel 590. The congestion may be with respect to particular terminal nodes. The access node 575 may, for example, detect that video transmissions to the terminal node 555 are of a type that uses a reactive video client that monitors its packet reception rates and decoder queue depths and will request a different video rate from the video server 510 when the terminal node 555 deems that such action will preserve or improve user quality of experience. The access node 575 may (e.g., under the control of an admission control module) intentionally reduce or increase transmissions to the terminal node 555 in order to trigger the terminal node 555 to request a different video rate. Alternatively, the access node 575 may communicate with an application on the terminal node 555 to trigger it to request a video rate change.

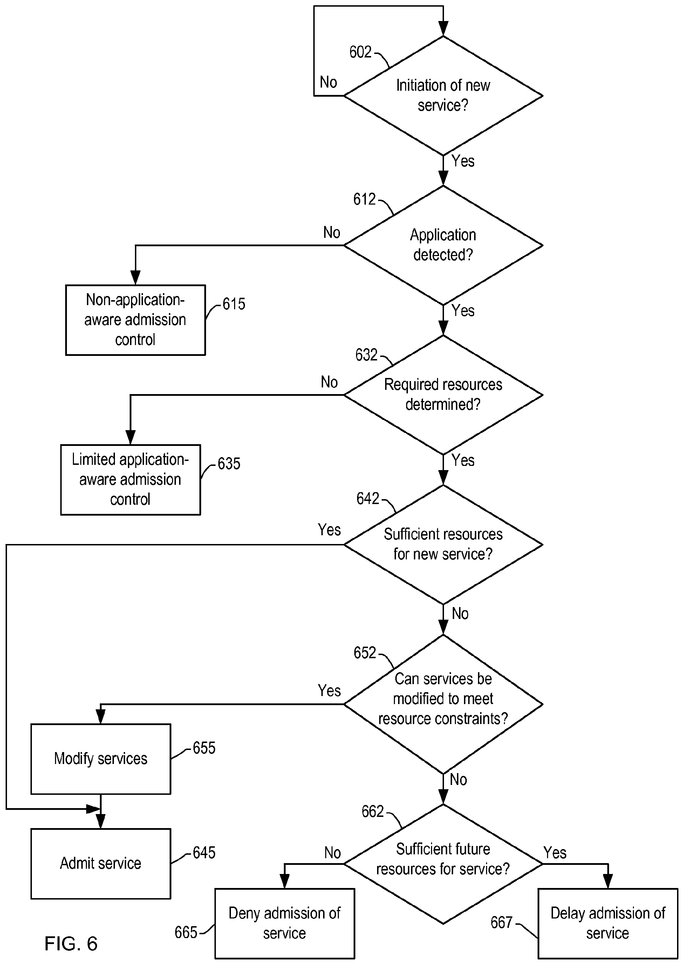

FIG. 6 is a flowchart of a process for admission control in accordance with aspects of the invention. The process may be used in a communication network, for example, wireless communication network of FIG. 1. The process may be performed by an access node, for example, the access node 275 of FIG. 2, the access node 375 of FIG. 3, or the access node 475 of FIG. 4. The process may also be distributed across multiple devices, for example, the gateway node 595 and the access node 575 of FIG. 5.

In step 602, the process determines whether a new service has been initiated or requested. Initiation or request of a new service may be detected, for example, by detecting the setup of a new bearer, detecting creation of a TCP connection to a well-known server on an existing bearer, or by detecting a new application (e.g., a YouTube video session) on an existing bearer. If initiation of a new service is detected, the process continues to step 612; otherwise, the process remains in step 602.

In step 612, the process determines whether an application has been detected for the new service. The application may include an application class (e.g., video, voice, email) and a specific application (e.g., YouTube, Netflix, Skype). The application may be detected, for example, by using the methods described herein. For instance, in an LTE eNodeB, IMS signaling to a user equipment followed by establishment of a bearer on Quality of Service (QoS) Class Identifier (QCI) 1 or another QCI designated by operator policy to carry VoLTE services can indicate that the new service is a conversational voice service. Simultaneous establishment of a second service on QCI 2 can indicate a conversational video component associated with the conversational voice service. Simultaneous initiation of voice and video services can occur, for example, for conversational video over VoLTE, video Skype, or a FaceTime application. If the two services are established in the same class of service or QCI, the process may distinguish the voice and video services by bit rates. The voice service may have a bit rate between about 12 kbps and 64 kbps and the video service would have a significantly higher bit rate, for example, 384 kbps. If an application class is known for the new service or session, the process continues to step 632; otherwise, the process continues to step 615.

In step 615, the process applies non-application-aware admission control. This admission control may be based, for example, on a service level agreement or on bearer parameters such as GBR. The process may also base admission control decisions on constraints such as limiting the number of simultaneously active TCP connections for a user equipment.

In step 632, the process determines whether the resources required for the new service have been determined. The required resources may be estimated. Many methods may be used to determine required resources. For example, for a service on a new bearer, the process may determine required resources taking into account bearer configuration parameters, such as GBR, if they exist. Alternatively, the process may determine required resources taking into account an application associated with a class of service. For example, the class of service, such as an LTE QCI may indicate an application class or specific application, such as VoLTE, for which a data rate or set of data rates is known, bounded, or estimable. Alternatively, the process may determine required resources for a new service on an existing bearer by inspecting packets used to initiate the service. For example, HTTP request and response packets for starting a YouTube video describe the data rate and size of the video. For another example, the process may determine required resources from a list of possible video representations, each with an associated format, resolution, and data rate, for a YouTube video available from the YouTube server that are transmitted as part of a protocol for starting the YouTube video. For some new services or sessions the process may not be able to determine (or estimate) the required resources. For example, the process may determine that a new session contains video but there may not be sufficient information to determine or estimate the data rate for the video. If the resources required for the new service have been determined, the process continues to step 642; otherwise, the process continues to step 635.

In step 635, the process applies limited application-aware admission control. Limited application-aware admission control may look at the relative priorities of different application classes or specific applications without considering resource usage. For instance, simultaneous voice and video services on the same bearer or to the same user equipment may indicate a video call. The voice component may be deemed of higher value than the video component. So, if congestion exists, the voice component may be allowed admission while the video component is denied admission, or suspended pending resource availability in the future. Additionally, admission of new services and the corresponding retention or modification of existing services may be based on a prioritized list of application classes, specific applications, or a combination of application classes and specific applications. The prioritized list may be established by the operator. For example, an operator may prefer that services on best-effort bearers (e.g., LTE QCI 9) use an admission control policy prioritizing application classes, from highest to lowest, as follows: conversational voice (e.g., VoIP), audio (e.g., Pandora), conversational video (e.g., video Skype), streaming video (e.g., YouTube), non-voice/non-video data (e.g., Facebook updates or email). If in step 635, a new conversational voice service is detected, a lower priority service may be modified (e.g., streaming video bitrate reduced) or terminated (e.g., a Facebook update) if current or predicted congestion is above a certain threshold.

In step 642, the process determines whether there are sufficient resources to admit the new service. The process may determine whether there are sufficient resources to admit the new session or service by various methods. If there are sufficient resources to admit the new session or service, the process continues to step 645; otherwise, the process continues to step 652.

The process may use a measurement or estimate of user quality of experience (QoE) to determine whether sufficient resources exist to admit the new service. For example, if admitting the new service would cause an existing service to fall below a measure of quality, the process may determine that there are not sufficient resources to admit the new service. Alternatively, the process may compare a mean or median metric for multiple existing services to a threshold to determine whether sufficient resources exist. The process may, for example, compare available capacity and demands for bandwidth. The process may also use congestion measures to determine whether sufficient resources exist to admit the new service. For example, the process may measure congestion and determine resources as described in use congestion measures in U.S. patent application Ser. No. 13/243,507, filed Aug. 28, 2012 and titled "Systems and Methods for Prioritization of Data for Intelligent Discard in a Communications Network."

The process may also take into account operator policy or service level agreements (SLAs) to determine whether sufficient resources exist. For example, the above congestion-based techniques may be applied only for services from users who pay an operator for a "gold" service, whereas service from users who pay for a lower level service may instead have services suspended.

In step 645, the process admits the new service.

In step 652, the process determines whether one or more services can be modified to allow sufficient resources to admit the new service. The modified services may include the new service. Modifying a service may include reducing the service's data rate. It may be preferable to intentionally degrade some services to maintain or improve the QoE of other services. For example, an LTE base station may intentionally reduce scheduling resources (e.g., weights or credits) allocated to one streaming video session in order to preserve the QoE for other active streaming video sessions. That is to say, the process may prefer impacting QoE for one user to maintain the QoE for many other users.

The process may, for example, modify a new video service by eliminating representation choices that exceed the available resources and retaining the representation choices that are within the available resources. Alternatively or additionally, the process may modify a service by performing congestion induced video scaling. Alternatively or additionally, the process may apply intelligent discard to one or more services. For example, the process may use methods for intelligent discard described in U.S. patent application Ser. No. 13/243,507, filed Aug. 28, 2012 and titled "Systems and Methods for Prioritization of Data for Intelligent Discard in a Communications Network." Modifications to services may be constrained, allowed, or disallowed by a policy or service level.

The process may also modify a service by terminating or suspending the service. The terminated or suspended service can be an existing service deemed lower in priority than the new service. Combinations of modifications, including suspensions and terminations, may be used. When multiple sets of service modifications are possible, the process may select a particular modification based on maximizing QoE. If services can be modified to allow sufficient resources, the process continues to step 655; otherwise, the process continues to step 662.

In step 655, the process modifies services as determined in step 652. Thereafter, the process continues to step 645 to admit the new service. The process may modify services by adjusting the resources allocated to the services in a scheduling system. For example, in a weight or credit based scheduler, the weights or credits for a service may be reduced. Alternatively, the scheduling priority of a service may be reduced when a strict priority based scheduling system is utilized. These and other methods can result in the freeing of resources to admit a new service. The methods may also be used to address a reduction in capacity and to address increased demand.

The modification of services by adjusting resources may be performed so as to minimize overall reduction of user QoE. For example, in a network with heterogeneous services such as streaming video and web browsing, the resources for a web browsing session may be reduced with the knowledge that packets associated with web browsing are significantly more delay and discard tolerant than those of streaming video. Accordingly, the reduction of resources for browsing sessions would have a smaller effect on the user QoE as compared to a streaming video session.

Adjusting resource allocation may be harmonized for individual sessions of similar types (e.g., streaming video). Accordingly, the change in resource allocation may be equivalent across all streams of a same or similar type. For example, a 25% reduction in allocated resources (e.g., weights or credits in a proportional fair scheduling (PFS) system) may be applied to all bearers that contain streaming video sessions. This method may be used, for example, when all video sessions are operating with a large margin above a minimum user QoE threshold. For example, if the estimated VMOS score of all video sessions is above 4.5 and a minimum VMOS threshold is established to be 4.0, all of the sessions may be tolerant of an equivalent reduction of resources.

Alternatively, the amount of resource allocation may be applied uniquely on a per session or per user basis. For example, a resource reduction of 25% may only be applied to those video streaming sessions which have a measure of quality above a certain threshold (e.g., a VMOS score above 4.5).

Alternatively, resource allocation may be a function of current user QoE. For example, the resource allocation may include a factor that is inversely proportional to user QoE. When applied on a periodic basis, this method can create a feedback control loop that allocates resources to meet a desired level of user QoE without allocating more resources than are required. That is, when the QoE drops below a set point more resources are deemed to be required by the service and therefore more resources are allocated; when the QoE rises above the set point fewer resources are deemed to be required by the service and therefore fewer resource are allocated. For example, the following equation may be employed to determine resource allocation on a periodic basis:

$$R(i) = R_0 + \alpha(Q_0 - Q(i)) \,,$$

where:

$R(i)$ is the resource allocation deemed required to support data stream i (e.g., an LTE bearer or a streaming video session);

$R_0$ is the resource allocation deemed required as calculated by conventional methods (e.g., as in an existing wireless PFS scheduler taking into account aspects such as GBR, MBR, and modulation and coding);

$\alpha$ (alpha) is a scaling constant used to adjust the importance of the QoE term;

$Q_0$ is the QoE control set point (e.g., 1/(packet discard rate threshold)); and

$Q(i)$ is the current QoE measurement or estimate of scheduled data stream $i$ (e.g., 1/(packet discard rate averaged over the past 100 milliseconds)).

The constant $\alpha$ may, in an embodiment, be a function of user SLA or operator policy. For example, $\alpha$ may be zero for "bronze" and "silver" level customers but may be one for "gold" level customers. In addition, $\alpha$ may be a function of the specific application (e.g., YouTube, Netflix, Skype) or application class (e.g., streaming video, video chat, VoIP calling). For instance, a system may know that a smaller $\alpha$ for a short duration, low data rate video may work as well as a large $\alpha$ for a long duration, high data rate video.

In step 662, the process determines whether there will be sufficient resources in the future to admit the new service. This determination may take into consideration when current services are expected to terminate. If there will be sufficient resources in the future to admit the new service, the process continues to step 667; otherwise, the process continues to step 665.

In step 667, the process delays admission of the new service. The length of delay may be based, for example, on knowledge of when resources will become available. Resources may become available, for example, due to the anticipated end of another service.

In step 665, the process denies admission of the new service.

The process for admission control may be modified by adding, omitting, reordering, or altering steps. For example, in some embodiments, step 652, step 662, and step 667 may be omitted so that if the process determines at step 642 that there are not sufficient resources for the new service, the process proceeds directly to step 665 to deny the new service.

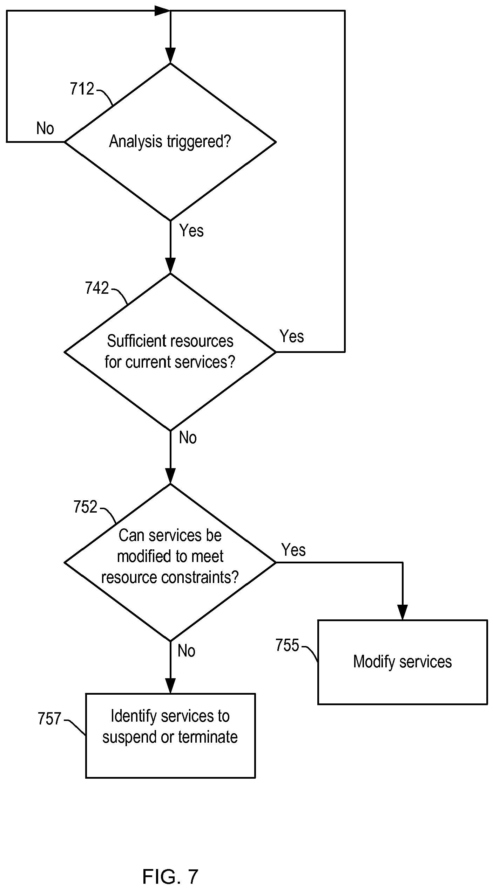

FIG. 7 is a flowchart of a process for graceful degradation of services in a communication network in accordance with aspects of the invention. The process of FIG. 7 may be used with the process of FIG. 6 and performed in similar communication networks by similar devices, including distributed across multiple devices.

In step 712, the process of FIG. 7 determines whether an analysis of resource needs and availability has been triggered. The trigger may be, for example, a reduction in system resources, an increase in demand, or a periodic trigger. If an analysis is triggered, the process continues to step 742; otherwise, the process remains at step 712.

A reduction in system resources may occur, for example, when operational parameters for communications with a user equipment are changed. For example, a signal degradation due to multipath, interference, or mobility induced propagation loss may lead to the user equipment's modulation and coding scheme being changed to a more robust but less efficient modulation and coding scheme. A reduction in system resources may also occur when system resources are diverted to other purposes. For example, system resources may be diverted to increase control channel resources or system resources may be diverted for interference reduction with neighboring cells in a self-organizing network (SON).

Alternatively or additionally, the process may detect an increase in demand and trigger an analysis. An increase in demand may be detected when a performance metric has crossed a threshold. For example, if a buffer occupancy, a buffer egress rate, a discard rate, or another measure of quality for a service has crossed its respective threshold, an analysis may be triggered. Other events or metrics that indicate a need for more resources may also trigger an analysis.

Alternatively or additionally, the process may determine that an analysis is triggered periodically. For example, a trigger may occur every 1 millisecond (ms). A periodic trigger may aid in assuring that sufficient resources exist to maintain an appropriate level of quality of experience for the current services.

In step 742, the process determines whether there are sufficient resources to support the current services. The determination may be similar to the determination made in step 642 in the process of FIG. 6. If there are sufficient resources to support the current services, the process returns to step 712; otherwise, the process continues to step 752.

In step 752, the process determines whether one or more services can be modified to allow sufficient resources to support the current services. The determination may be similar to the determination made in step 652 in the process of FIG. 6. If services can be modified to allow sufficient resources, the process continues to step 755; otherwise, the process continues to step 757.

In step 755, the process modifies the services as determined in step 752. The modifications may be performed similarly to the modifications made in step 655 in the process of FIG. 6.

In step 757, the process identifies a service or services for suspension or termination. The terminated or suspend service or services can be, for example, services that are deemed lowest in priority.

The process for graceful degradation of services may be modified by adding, omitting, reordering, or altering steps. For example, in some embodiments, step 755 and step 757 may both performed so that some services are modified and other services are suspended or terminated. Further, if resources become available, such as from changing a user equipment's modulation and coding scheme to a more efficient modulation and coding scheme, the modifications, suspension, or terminations to services may be reversed to take advantage of the available resources.

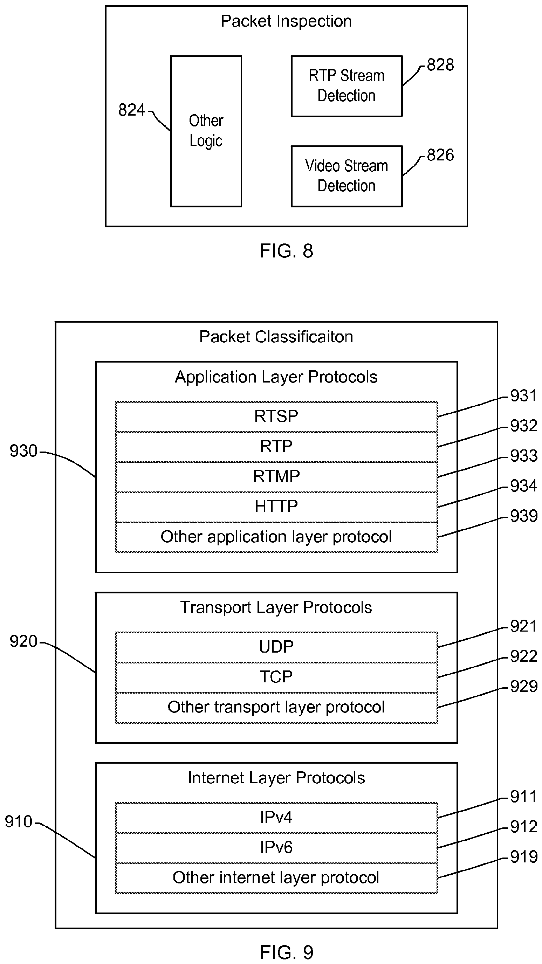

FIG. 8 is a block diagram of a packet inspection module in accordance with aspects of the invention. The packet inspection module 429 of the access node 475 of FIG. 4 may, for example, be provided by the packet inspection module of FIG. 8. The packet inspection module of FIG. 8 may also be used at other nodes in a network.

The packet inspection module includes a Real-Time Protocol (RTP) stream detection module 828 and a video stream detection module 826 for detecting whether either user datagram protocol (UDP) or transmission control protocol (TCP) packets contain video data transported using the RTP protocol. An RTP stream is a stream of packets flowing between two endpoints and carrying data using the RTP protocol, where endpoints are defined by IP address and port number pairs.

The packet inspection module may also implement other functions. For example, the packet inspection module may provide other packet inspection functions, such as detection of TCP connection establishment. The other functions are provided by an other logic module 824. In an embodiment, the packet inspection module receives traffic flowing in two directions and classifies the packets flowing in one direction using information from the packets flowing in the other direction. The packet inspection module may receive information about the traffic flowing in the other direction from a second packet inspection module rather receiving the traffic itself.

The RTP stream detection module 828 parses the first several bytes of UDP or TCP payload according to the format of an RTP packet header and checks the values of the RTP header fields to determine whether the stream flowing between two endpoints is an RTP stream. The RTP header format does not depend on the media type carried in RTP payload, while the RTP payload format is media type specific. If the payload of a UDP or TCP packet contains an RTP packet, the values of several fields in the RTP header will have a special pattern. The RTP stream detection module 828 may use one of these patterns or a combination of these patterns in determining whether a stream is an RTP stream.

If a stream is detected to be an RTP stream, the video stream detection module 826 will perform further inspection on the RTP packet header fields and the RTP payload to detect whether the RTP stream carries video. The video stream detection module 826 may also determine the video coding format used from the video codec that generated the video stream. Example video codecs include MPEG-4, AVC/H.264, and MPEG-2.

Payload types of some RTP payloads related to video are defined in IETF RFC 3551. However, for a video codec with dynamically assigned payload type, the codec parameters are included in a Session Description Protocol (SDP) message. The SDP message may not be available to the video stream detection module 826. If the video stream detection module 826 detects that payload type is dynamically assigned, the video stream detection module 826 may collect statistics regarding the stream. For example, statistics of values of the RTP header field "timestamp," RTP packet size, and RTP packet data rate may be collected. The video stream detection module 826 may then use the collected statistics to determine whether the RTP stream carries video data.

A video stream usually has some well-defined frame rate, for example, 24 frames per second (FPS), 25 FPS, 29.97 FPS, 30 FPS, or 60 FPS. In an embodiment, the video stream detection module 826 detects whether an RTP stream carries video data at least partially based on whether values of the RTP packet timestamp change in integer multiples of a common frame temporal distance.

A video stream usually has a higher average data rate and a larger fluctuation in the instantaneous data rate compared to an audio stream. In an embodiment, the video stream detection module 826 detects whether an RTP stream carries video data at least partially based on the magnitude of the average RTP data rate and the fluctuation in the instantaneous RTP data rate.

The RTP payload format is media specific. For example, an H.264 payload in an RTP packet always starts with a network abstraction layer (NAL) unit header whose structure is defined in IETF RFC 6814 ("RTP Payload Format for H.264 Video"). In an embodiment, the video stream detection module 826 detects which video codec generates the video data carried in an RTP stream at least partially based on the pattern of the first several bytes the RTP payload.

FIG. 8 illustrates a particular allocation of functions to various modules and a particular combination of modules. Many other arrangements may also be used. For example, some modules of the packet inspection module could be distributed over multiple network nodes. Additionally, the packet inspection module may include other functions. Further, inspection module may be separately provided for the uplink direction and for the downlink direction.

FIG. 9 is a block diagram of a packet classification module in accordance with aspects of the invention. The packet classification module may be part of a packet inspection module, such as the packet inspection module 329 of FIG. 3 or the packet inspection module 429 of FIG. 4. The packet classification module generally classifies packets at multiple protocol layers.

The packet classification module can analyze the information in the packet header of an IP packet according to analysis of an Internet layer protocol 910. The Internet layer protocol 910 analysis can include IPv4 protocol characteristics 911, IPv6 protocol characteristics 912, and other Internet layer protocol characteristics 919.

The packet classification module can also analyze information in the header of the protocol data unit of a transport layer protocol 920. The transport layer protocol 920 analysis can include UDP protocol characteristics 921, TCP protocol characteristics 922, and other transport layer protocol characteristics 929.

The packet classification module can also analyze information in the messages of an application layer protocol 930. The application layer protocol 930 analysis can include RTSP protocol characteristics 931, RTP protocol characteristics 932, RTMP protocol characteristics 933, HTTP protocol characteristics 934, and other application layer protocol characteristics 939.

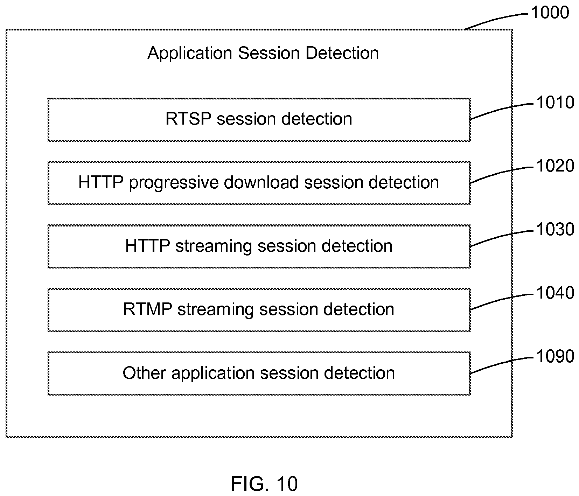

FIG. 10 is a block diagram of an application session detection module 1000 in accordance with aspects of the invention. The application session detection module 1000 may be part of a packet inspection module, such as the packet inspection module 329 of FIG. 3 or the packet inspection module 429 of FIG. 4. The application session detection module 1000 includes an RTSP session detection module 1010, an HTTP progressive download session detection module 1020, an HTTP streaming session detection module 1030, an RTMP streaming session detection module 1040, and an other application session detection module 1090 that can detect sessions of other applications. Each of the session detection modules may also maintain information about sessions of applications that are currently active.

The application session detection module 1000 can detect Internet Protocol (IP) source and destination addresses in order to determine an application class (e.g., video) and specific application (e.g., Netflix) of a data stream. Using the IP source and destination addresses, the application session detection module 1000 can perform a reverse domain name system (DNS) lookup or Internet WHOIS query to establish the domain name and/or registered assignees sourcing or receiving the Internet-based traffic. The domain name and/or registered assignee information can then be used to establish an application class and a specific application for the data stream based upon a priori knowledge of the domain or assignee's operations. The application class and specific class information, once derived, can be stored for reuse. For example, if more than one user device accesses Netflix, the application session detection module 1000 can be configured to cache application information so that the application session detection module 1000 would not need to determine the application class and specific application for subsequent accesses to Netflix by the same user device or another user device on the network.

If traffic with a particular IP address yielded, for example, a reverse DNS lookup or WHOIS query that included the name "Netflix" then this traffic stream could be considered a unicast video stream (application class) using the Netflix service (specific application). In an embodiment, a comprehensive mapping between domain names or assignees and application class and specific application is maintained. The mapping may be periodically updated to ensure that the mapping remains up to date.

The application session detection module 1000 is, in an embodiment, configured to inspect the headers, the payload fields, or both of data packets associated with various communications protocols and to map the values contained therein to a particular application class or specific application. For example, the application session detection module 1000 can be configured to inspect the host field contained in an HTTP header. The host field typically contains domain or assignee information which, as described above, is used to map the stream to a particular application class or specific application. For example, if an HTTP header field of "v11.lscache4.c.youtube.com" were detected, it could be mapped to Application Class = video stream and Specific Application = YouTube.

The application session detection module 1000 is, in an embodiment, configured to inspect the "Content Type" field in an HTTP message. The content type field contains information regarding the type of payload, based upon the definitions specified in the multipurpose internet mail extensions (MIME) format as defined by the Internet Engineering Task Force (IETF). For example, the following MIME formats would indicate either a unicast or broadcast video packet stream: video/mp4, video/quicktime, video/x-ms-wm. In an embodiment, the application session detection module 1000 is configured to map an HTTP message to the video stream application class if the application session detection module 1000 detects any of these MIME types within the HTTP message.

The application session detection module 1000 is, in an embodiment, configured to inspect a protocol sent in advance of the data stream. For example, the application session detection module 1000 may be configured to identify the application class or specific type based on the protocol used to set up or establish a data stream instead of identifying this information using the protocol used to transport the data stream. According to an embodiment, the protocol sent in advance of the data stream is used to identify information on application class, specific application, and characteristics that allow the transport data stream to be identified once initiated. The HTTP request and response messages for starting a YouTube video stream, for example, may be used to identify the transport data stream.

The application session detection module 1000 is, in an embodiment, configured to inspect real time streaming protocol (RTSP) packets, which can be used to establish multimedia streaming sessions. RTSP packets are encapsulated within TCP/IP frames and carried across an IP network. RTSP establishes and controls multimedia streaming sessions with the client and server exchanging RTSP messages. A RTSP message sent from the client to the server is a request message. The first line of a request message is a request line. The request line is formed with three elements: (1) Method; (2) Request-URI; and (3) RTSP-Version.

RTSP defines methods including OPTIONS, DESCRIBE, ANNOUNCE, SETUP, PLAY, PAUSE, TEARDOWN, GET_PARAMETER, SET _PARAMETER, REDIRECT, and RECORD. Below is an example of a message exchange between a client ("C") and a server ("S") using method DESCRIBE. The response message from the server has a message body which is separated from the response message header with one empty line.

```
C -> S: DESCRIBE rtsp://s.companydomain.com:554/dir/f.3gp RTSP/1.0
     CSeq: 312
     Accept: application/sdp
S->C: RTSP/1.0 200 OK
     CSeq: 312
     Date: 23 Jan 1997 15:35:06 GMT
     Content-Type: application/sdp
     Content-Length: 376
     v=0
     o=- 2890844526 2890842807 IN IP4 126.16.64.4
     s=SDP Seminar
     c=IN IP4 224.2.17.12/127
     t=2873397496 2873404696
     m=audio 49170 RTP/AVP 0
     m=video 51372 RTP/AVP 31
```

Request-URI in an RTSP message always contains the absolute URI as defined in IETF RFC 2396 ("Uniform Resource Identifiers (URI): Generic Syntax"). An absolute URI in an RTSP message contains both the network path and the path of the resource on the server. Following is the absolute URI in the message listed above. rtsp://s.companydomain.com:554/dir/f.3gp

RTSP-Version indicates which version of the RTSP specification is used in an RTSP message.

The application session detection module 1000 is, in an embodiment, configured to inspect the absolute URI in the RTSP request message and extract the network path. The network path typically contains domain or assignee information which, as described in the embodiment above, is used to map the stream to a particular application class or specific application. For example, an RTSP absolute URI "rtsp://v4.cache8.c.youtube.com/dir_path/video.3gp" could be inspected and mapped to Application Class = video stream, Specific Application = YouTube. In an embodiment, the application session detection module 1000 inspects packets sent from a client to a server to classify related packets sent from the server to the client. For example, information from an RTSP request message sent from the client may be used in classifying responses from the server.

The RTSP protocol may specify the range of playback time (duration) for a video session by using the Range parameter signaled using the PLAY request. The request may include a bounded (i.e. start, stop) range of time or an open-end range of time (i.e. start time only). Time ranges may be indicated using either the normal play time (npt), smpte or clock parameters. Npt time parameters may be expressed in either hours:minutes:seconds.fraction format or in absolute units per ISO 8601 format timestamps. Smpte time values are expressed in hours:minutes:seconds.fraction format. Clock time values are expressed in absolute units per ISO 8601 formatted timestamps. Examples of Range parameter usage are as follows:

Range: npt=1:02:15.3-

Range: npt=1:02:15.3 - 1:07:15.3

Range: smpte=10:07:00-10:07:33:05.01

Range: clock=19961108T142300Z-19961108T143520Z

The application session detection module 1000 is, in an embodiment, configured to inspect the RTSP messages and extract the Range information from a video stream using the npt, smpte, or clock fields. The npt, smpte, and clock parameters within an RTSP packet may use alternate syntaxes in order to communicate the information described above.

The RTSP protocol includes a DESCRIBE request that is used to communicate the details of a multimedia session between Server and Client. This DESCRIBE request is based upon the Session Description Protocol (SDP is defined in RFC 4566 which supersedes RFC 2327) which specifies the content and format of the requested information. With SDP, the m-field defines the media type, network port, protocol, and format. For example, consider the following SDP media descriptions:

    m=audio 49170 RTP/AVP 0
    m=video 51372 RTP/AVP 31

In the first example, an audio stream is described using the Real-time Transport Protocol (RTP) for data transport on Port 49170 and based on the format described in the RTP Audio Video Profile (AVP) number 0. In the second example, a video stream is described using RTP for data transport on Port 51372 based on RTP Audio Video Profile (AVP) number 31.

In both RTSP examples, the m-fields are sufficient to classify a data stream to a particular application class. Since the m-fields call out communication protocol (RTP) and UDP port number, the ensuing data stream(s) can be identified and mapped to the classification information just derived. However, classification to a specific application is not possible with this information alone.

The SDP message returned from the server to the client may include additional fields that can be used to provide additional information on the application class or specific application.

An SDP message contains the payload type of video and audio stream transported in RTP. Some RTP video payload types are defined in IETF RFC 3551 ("RTP Profile for Audio and Video Conferences with Minimal Control"). For example, the payload type of an MPEG-1 or MPEG-2 elementary video stream is 32, and the payload type of an H.263 video stream is 34. However, the payload type of some video codecs, such as H.264, is dynamically assigned, and an SDP message includes parameters of the video codec. In an embodiment, the video codec information may be used in classifying video data streams, and treating video streams differently based on video codec characteristics.

An SDP message may also contain attribute "a=framerate:<frame rate>", which is defined in RFC 4566, that indicates the frame rate of the video. An SDP message may also include attribute "a=framesize:<payload type number> <width> <height>", which is defined in 3GPP TS 26.234 ("Transparent End-to-End Packet-switched Streaming Service, Protocols and Codecs"), may be included in SDP message to indicate the frame size of the video. For historical reasons, some applications may use non-standard attributes such as "a=x-framerate: <frame rate>" or "a=x-dimensions: <width> <height>" to pass similar information as that in "a=framerate:<frame rate>" and "a=framesize:<payload type number> <width> <height>". In an embodiment, the application session detection module 1000 is configured to inspect the SDP message and extract either the frame rate or the frame size or both of the video if the corresponding fields are present. The frame rate or the frame size or both can be used in mapping the stream to a particular application class or specific applications or for determining resource requirements of the stream.

The application session detection module 1000 is, in an embodiment, configured to inspect network packets directly to detect whether these packets flowing between two endpoints contain video data carried using RTP protocol. The application session detection module 1000 may perform this without inspecting the SDP message or any other message that contains the information describing the RTP stream. This may happen, for example, when the SDP message or another message containing similar information does not pass through the application session detection module 1000.

Although FIG. 10 illustrates a particular allocation of functions to various modules and a particular combination of modules, many other arrangements may also be used. Further, the application session detection module 1000 may inspect other packet attributes to detect video streams.

The foregoing systems and methods and associated devices and modules are susceptible to many variations. Additionally, for clarity and concision, many descriptions of the systems and methods have been simplified. For example, the figures generally illustrate one of each type of device (e.g., one access node, one terminal node), but a communication system may have many of each type of device. Similarly, many descriptions use terminology and structures of a specific wireless standard such as LTE. However, the disclosed systems and methods are more broadly applicable, including for example, in hybrid fiber-coax cable modem systems.

Those of skill will appreciate that the various illustrative logical blocks, modules, units, and algorithm steps described in connection with the embodiments disclosed herein can often be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular constraints imposed on the overall system. Skilled persons can implement the described functionality in varying ways for each particular system, but such implementation decisions should not be interpreted as causing a departure from the scope of the invention. In addition, the grouping of functions within a unit, module, block, or step is for ease of description. Specific functions or steps can be moved from one unit, module, or block without departing from the invention.

The various illustrative logical blocks, units, steps and modules described in connection with the embodiments disclosed herein can be implemented or performed with a processor, such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

The steps of a method or algorithm and the processes of a block or module described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium. An exemplary storage medium can be coupled to the processor such that the processor can read information from, and write information to, the storage medium. In the alternative, the storage medium can be integral to the processor. The processor and the storage medium can reside in an ASIC. Additionally, device, blocks, or modules that are described as coupled may be coupled via intermediary device, blocks, or modules. Similarly, a first device may be described as transmitting data to (or receiving from) a second device when there are intermediary devices that couple the first and second device and also when the first device is unaware of the ultimate destination of the data.

The above description of the disclosed embodiments is provided to enable any person skilled in the art to make or use the invention. Various modifications to these embodiments will be readily apparent to those skilled in the art, and the generic principles described herein can be applied to other embodiments without departing from the scope of the invention. Thus, it is to be understood that the description and drawings presented herein represent a presently preferred embodiment of the invention and are therefore representative of the subject matter that is broadly contemplated by the present invention. It is further understood that the scope of the present invention fully encompasses other embodiments that may become obvious to those skilled in the art and that the scope of the present invention is accordingly limited by nothing other than the appended claims.

**Claims**

1. An access node, comprising:

    a transceiver module (379) configured to provide communications with a terminal node;
    a packet inspection module (329) configured to inspect packets communicated with the terminal node over at least one existing bearer to detect information about applications associated with the packets; and
    an admission control module (360) configured to detect an admission request sent from the terminal node over one of the at least one existing bearer, the admission request being a request for a new service including at least a video service, and to determine at least one admission control response to the admission request based on the application information associated with the packets of the admission request and based on information about congestion in communications with the terminal node,
    wherein the at least one admission control response includes action on one or more packets that are associated with an admission protocol corresponding to the admission request, wherein the action on one or more packets includes admitting, denying, modifying, or delaying,
    **characterized in** the access node further comprising:

    a scheduler module (330) configured to receive downlink packets, group the downlink packets into queues, and schedule the downlink packets for transmission to one or more of the terminal nodes utilizing scheduler parameters,
    wherein the admission control module (360) creates a control response to change scheduling priorities or scheduling resource allocation, and receives updates to scheduler parameters from the scheduler module (330).

2. The access node of claim 1 or the method of claim 12, wherein the information about congestion:

(a) is information specific to the terminal node; or
(b) includes predicted congestion; or
(c) includes an analysis of video data transmitted versus time compared to a file size of the video data; or
(d) includes a quality measure of a video session.

3. The access node of claim 2 when dependent on option (b), wherein the at least one admission control response is more likely to be to deny the request when congestion is predicted.

4. The access node of claim 1, wherein the packet inspection module is further configured to inspect packets associated with the admission request to detect the characteristics of the application associated with the admission request.

5. The access node of claim 4, wherein the access node is used in a long term evolution, LTE system, and wherein inspecting packets includes detecting a voice over LTE, VoLTE session by detecting Internet protocol, IP multimedia subsystem, IMS signaling followed by creation of a bearer with a voice bit rate.

6. The access node of claim 4 or the method of claim 12, wherein inspecting packets includes detecting an interactive voice plus video session by detecting Internet protocol, IP multimedia subsystem, IMS signaling followed by creation of a bearer with a voice bit rate and creation of a bearer with a video bit rate.

7. The access node of claim 6 or the method of claim 12 wherein determining the at least one admission control response includes denying creation of the bearer with a video bit rate in favor of the bearer with a voice bit rate.

8. The access node of claim 1, wherein the admission control module is further configured to detect whether an existing service is using less bandwidth than budgeted for that service, and wherein the at least one admission control response includes admitting the new service when the information about congestion indicates that existing services and the new service would have a bandwidth allocation that is higher than the bandwidth of available resources and an existing service using less bandwidth than budgeted for that service was detected.

9. The access node of claim 1 or the method of claim 12, wherein the at least one admission control response is to admit the new service and modify an existing service to provide bandwidth for the new service, wherein the modification of the existing service includes modifying an allocation of resources to the existing service, wherein the existing service is a video service capable of supplying video data using multiple video representations, and wherein the modification of the allocation of resources is chosen to trigger a change in a video representation requested by a video client associated with the existing service.

10. The access node of claim 1 or the method of claim 12, wherein inspecting packets includes detecting a bit rate by inspecting information in one or more packets used to initiate the new service.

11. The access node of claim 1 or the method of claim 12, wherein the at least one admission control response is determined to maximize user quality of experience.

12. A method for use in determining admission control responses, the method being performed by an access node and comprising:

inspecting packets communicated with a terminal node over at least one existing bearer to detect information about applications associated with the packets;
detecting an admission request sent from the terminal node over one of the at least one existing bearer, the admission request being a request for a new service including at least a video service; and
determining at least one admission control response to the admission request based on the application information associated with the packets of the admission request and based on information about congestion affecting communications with the terminal node,
wherein the at least one admission control response includes action on one or more packets that are associated with an admission protocol corresponding to the admission request, wherein the action on one or more packets includes admitting, denying, modifying, or delaying, **characterized in** the method further comprising the steps of:

receiving downlink packets, grouping the downlink packets into queues, and scheduling the downlink packets for transmission to one or more of the terminal nodes utilizing scheduler parameters;
supplying congestion metrics to the admission control module of the access node for use in determining admission control responses; and

changing scheduling priorities or scheduling resource allocation, and updating to the scheduler parameters.

**13.** The method of claim 12, wherein the method is used in a long term evolution, LTE system, and wherein inspecting packets includes detecting a voice over LTE, VoLTE session by detecting Internet protocol, IP multimedia subsystem, IMS signaling followed by creation of a bearer with a voice bit rate.

**14.** The method of claim 12, further comprising detecting whether an existing service is using less bandwidth than budgeted for that service, and wherein the new service is admitted when the information about congestion indicates that the existing services and the new service would have a bandwidth allocation that is higher than the bandwidth of available resources and an existing service using less bandwidth than budgeted for that service was detected.

**15.** The method of claim 12, further comprising inspecting packets associated with the admission request to detect the characteristics of the application associated with the admission request.


**Patentansprüche**

**1.** Zugangsknoten, umfassend:

ein Sendeempfängermodul (379), das dazu konfiguriert ist, Kommunikationen mit einem Endknoten bereitzustellen;

ein Paketinspektionsmodul (329), das dazu konfiguriert ist, Pakete zu inspizieren, die mit dem Endknoten über mindestens einen vorhandenen Träger kommuniziert werden, um Informationen zu Anwendungen zu erkennen, die den Paketen zugeordnet sind; und ein Zulassungssteuerungsmodul (360), das dazu konfiguriert ist, eine Zulassungsanforderung zu erkennen, die von dem Endknoten über einen des mindestens einen vorhandenen Trägers gesendet wird, wobei die Zulassungsanforderung eine Anforderung für einen neuen Dienst einschließlich mindestens eines Videodienstes ist, sowie mindestens eine Zulassungssteuerungsantwort auf die Zulassungsanforderung basierend auf den Anwendungsinformationen, die den Paketen der Zulassungsanforderung zugeordnet sind, und basierend auf Informationen zur Überlastung bei Kommunikationen mit dem Endknoten zu bestimmen,

wobei die mindestens eine Zulassungssteuerungsantwort eine Aktion an einem oder mehreren Paketen beinhaltet, die einem der Zulassungsanforderung entsprechenden Zulassungsprotokoll zugeordnet sind, wobei die Aktion an einem oder mehreren Paketen Zulassen, Ablehnen, Modifizieren oder Aufschieben beinhaltet, **dadurch gekennzeichnet, dass** der Zugangsknoten ferner Folgendes umfasst:

ein Planermodul (330), das dazu konfiguriert ist, Downlink-Pakete zu empfangen, die Downlink-Pakete in Warteschlangen zu gruppieren und die Downlink-Pakete zur Übertragung zu einem oder mehreren der Endknoten unter Verwendung von Planerparametern zu planen,

wobei das Zulassungssteuerungsmodul (360) eine Steuerungsantwort erzeugt, um die Planungsprioritäten oder die Planungsressourcenzuteilung zu ändern, und Aktualisierungen der Planerparameter von dem Planermodul (330) empfängt.

**2.** Zugangsknoten nach Anspruch 1 oder Verfahren nach Anspruch 12, wobei die Informationen zur Überlastung:

(a) für den Endknoten spezifische Informationen sind; oder

(b) eine vorhergesagte Überlastung beinhalten; oder

(c) eine Analyse von Videodaten, die innerhalb eines bestimmten Zeitraums gesendet werden, im Vergleich zu einer Dateigröße der Videodaten beinhalten; oder

(d) ein Qualitätsmaß einer Videositzung beinhalten.

**3.** Zugangsknoten nach Anspruch 2 bei Abhängigkeit von Option (b), wobei die mindestens eine Zulassungssteuerungsantwort wahrscheinlich eher dazu dient, die Anforderung abzulehnen, wenn eine Überlastung vorhergesagt wurde.

**4.** Zugangsknoten nach Anspruch 1, wobei das Paketinspektionsmodul ferner dazu konfiguriert ist, Pakete zu inspizieren, die der Zulassungsanforderung zugeordnet sind, um die Eigenschaften der Anwendung zu erkennen, die der Zulassungsanforderung zugeordnet sind.

**5.** Zugangsknoten nach Anspruch 4, wobei der Zugangsknoten in einem Long-Term-Evolution-, LTE-, System verwendet wird und wobei das Inspizieren von Paketen das Erkennen einer Voice-over-LTE-, VoLTE-, Sitzung durch Erkennen einer Internetprotokoll-, IP-, Multimedia-Subsystem-, IMS-, Signalgebung, gefolgt von der Erzeugung eines Trägers mit einer Sprachbitrate, beinhaltet.

**6.** Zugangsknoten nach Anspruch 4 oder Verfahren nach Anspruch 12, wobei das Inspizieren von Paketen das Erkennen einer interaktiven Sprache-plus-Video-Sitzung durch Erkennen einer Internetprotokoll-, IP-, Multimedia-Subsystem-, IMS-, Signalgebung, gefolgt von der Erzeugung eines Trägers mit einer Sprachbitrate und der Erzeugung eines Trägers mit einer Videobitrate, beinhaltet.

**7.** Zugangsknoten nach Anspruch 6 oder Verfahren nach Anspruch 12, wobei das Bestimmen der mindestens einen Zulassungssteuerungsantwort das Ablehnen der Erzeugung des Trägers mit einer Videobitrate zugunsten des Trägers mit einer Sprachbitrate beinhaltet.

**8.** Zugangsknoten nach Anspruch 1, wobei das Zulassungssteuerungsmodul ferner dazu konfiguriert ist, zu erkennen, ob ein vorhandener Dienst weniger Bandbreite als für diesen Dienst veranschlagt verwendet, und wobei die mindestens eine Zulassungssteuerungsantwort das Zulassen des neuen Dienstes beinhaltet, wenn die Informationen zur Überlastung angeben, dass die vorhandenen Dienste und der neue Dienst eine Bandbreitenzuteilung aufweisen würden, die über der Bandbreite verfügbarer Ressourcen liegt, und ein vorhandener Dienst, der weniger Bandbreite als für diesen Dienst veranschlagt verwendet, erkannt wurde.

**9.** Zugangsknoten nach Anspruch 1 oder Verfahren nach Anspruch 12, wobei die mindestens eine Zulassungssteuerungsantwort dazu dient, den neuen Dienst zuzulassen und einen vorhandenen Dienst zu modifizieren, um Bandbreite für den neuen Dienst bereitzustellen, wobei die Modifikation des vorhandenen Dienstes das Modifizieren einer Zuteilung von Ressourcen zu dem vorhandenen Dienst beinhaltet, wobei es sich bei dem vorhandenen Dienst um einen Videodienst handelt, der in der Lage ist, Videodaten unter Verwendung mehrerer Videodarstellungen bereitzustellen, und wobei die Modifikation der Zuteilung von Ressourcen ausgewählt wird, um eine Änderung in einer Videodarstellung auszulösen, die durch einen dem vorhandenen Dienst zugeordneten Videoklienten angefordert wird.

**10.** Zugangsknoten nach Anspruch 1 oder Verfahren nach Anspruch 12, wobei das Inspizieren von Paketen das Erkennen einer Bitrate durch Inspizieren von Informationen in einem oder mehreren Paketen beinhaltet, die zum Initiieren des neuen Dienstes verwendet werden.

**11.** Zugangsknoten nach Anspruch 1 oder Verfahren nach Anspruch 12, wobei die mindestens eine Zulassungssteuerungsantwort bestimmt wird, um die Benutzererfahrungsqualität zu maximieren.

**12.** Verfahren zur Verwendung beim Bestimmen von Zulassungssteuerungsantworten, wobei das Verfahren durch einen Zugangsknoten durchgeführt wird und Folgendes umfasst:

Inspizieren von Paketen, die mit einem Endknoten über mindestens einen vorhandenen Träger kommuniziert werden, um Informationen zu Anwendungen zu erkennen, die den Paketen zugeordnet sind;
Erkennen einer Zulassungsanforderung, die von dem Endknoten über einen des mindestens einen vorhandenen Trägers gesendet wird, wobei die Zulassungsanforderung eine Anforderung für einen neuen Dienst einschließlich mindestens eines Videodienstes ist; und
Bestimmen mindestens einer Zulassungssteuerungsantwort auf die Zulassungsanforderung basierend auf den Anwendungsinformationen, die den Paketen der Zulassungsanforderung zugeordnet sind, und basierend auf Informationen zur Überlastung, welche die Kommunikationen mit dem Endknoten beeinträchtigt,
wobei die mindestens eine Zulassungssteuerungsantwort eine Aktion an einem oder mehreren Paketen beinhaltet, die einem der Zulassungsanforderung entsprechenden Zulassungsprotokoll zugeordnet sind, wobei die Aktion an einem oder mehreren Paketen Zulassen, Ablehnen, Modifizieren oder Aufschieben beinhaltet,
**dadurch gekennzeichnet, dass** das Verfahren ferner die folgenden Schritte umfasst:

Empfangen von Downlink-Paketen, Gruppieren der Downlink-Pakete in Warteschlangen und Planen der Downlink-Pakete zur Übertragung zu einem oder mehreren der Endknoten unter Verwendung von Planerparametern;
Bereitstellen von Überlastungsmetriken an das Zulassungssteuerungsmodul des Zugangsknotens zur Verwendung beim Bestimmen von Zulassungssteuerungsantworten; und

Ändern der Planungsprioritäten oder der Planungsressourcenzuteilung und Aktualisieren der Planerparameter.

13. Verfahren nach Anspruch 12, wobei das Verfahren in einem Long-Term-Evolution-, LTE-, System verwendet wird und wobei das Inspizieren von Paketen das Erkennen einer Voice-over-LTE-, VoLTE-, Sitzung durch Erkennen einer Internetprotokoll-, IP-, Multimedia-Subsystem-, IMS-, Signalgebung, gefolgt von der Erzeugung eines Trägers mit einer Sprachbitrate, beinhaltet.

14. Verfahren nach Anspruch 12, ferner umfassend das Erkennen, ob ein vorhandener Dienst weniger Bandbreite als für diesen Dienst veranschlagt verwendet, und wobei der neue Dienst zugelassen wird, wenn die Informationen zur Überlastung angeben, dass die vorhandenen Dienste und der neue Dienst eine Bandbreitenzuteilung aufweisen würden, die über der Bandbreite verfügbarer Ressourcen liegt, und ein vorhandener Dienst, der weniger Bandbreite als für diesen Dienst veranschlagt verwendet, erkannt wurde.

15. Verfahren nach Anspruch 12, ferner umfassend das Inspizieren von Paketen, die der Zulassungsanforderung zugeordnet sind, um die Eigenschaften der Anwendung zu erkennen, die der Zulassungsanforderung zugeordnet sind.

**Revendications**

1. Noeud d'accès comprenant :

   un module émetteur/récepteur (379) configuré pour fournir des communications avec un noeud terminal ;
   un module d'inspection de paquets (329) configuré pour inspecter des paquets communiqués avec le noeud terminal sur au moins un support existant pour détecter des informations concernant des applications associées aux paquets ; et
   un module de commande d'admission (360) configuré pour détecter une demande d'admission envoyée à partir du noeud terminal sur un de l'au moins un support existant, la demande d'admission étant une demande pour un nouveau service incluant au moins un service vidéo, et pour déterminer au moins une réponse de commande d'admission à la demande d'admission sur la base des informations d'application associées aux paquets de la demande d'admission et sur la base d'informations concernant une congestion dans des communications avec le noeud terminal,
   dans lequel l'au moins une réponse de commande d'admission inclut une action sur un ou plusieurs paquets qui sont associés à un protocole d'admission correspondant à la demande d'admission, dans lequel l'action sur un ou plusieurs paquets inclut d'admission, le refus, la modification ou le retardement,
   **caractérisé en ce que** le noeud d'accès comprend en outre :

   un module planificateur (330) configuré pour recevoir des paquets de liaison descendante, regrouper les paquets de liaison descendante dans des files d'attente, et planifier les paquets de liaison descendante pour une transmission à un ou plusieurs des noeuds terminaux en utilisant des paramètres de planificateur, dans lequel le module de commande d'admission (360) crée une réponse de commande pour changer des priorités de planification ou une allocation de ressources de planification, et reçoit des mises à jour sur des paramètres de planificateur à partir du module planificateur (330).

2. Noeud d'accès selon la revendication 1 ou procédé selon la revendication 12, dans lequel les informations concernant une congestion :

   (a) sont des informations spécifiques au noeud terminal ; ou
   (b) comprennent une congestion prédite ; ou
   (c) comprennent une analyse de données vidéo transmises en fonction du temps par rapport à une taille de fichier des données vidéo ; ou
   (d) comprennent une mesure de qualité d'une session vidéo.

3. Noeud d'accès selon la revendication 2 quand elle dépend de l'option (b), dans lequel l'au moins une réponse de commande d'admission est plus susceptible d'être un refus de la demande quand une congestion est prédite.

4. Noeud d'accès selon la revendication 1, dans lequel le module d'inspection de paquets est configuré en outre pour inspecter des paquets associés à la demande d'admission pour détecter les caractéristiques de l'application associée à la demande d'admission.

5. Noeud d'accès selon la revendication 4, dans lequel le noeud d'accès est utilisé dans un système d'évolution à long terme, LTE, et dans lequel l'inspection de paquets inclut la détection d'une session vocale sur LTE, VoLTE, en détectant une signalisation de sous-système multimédia de protocole Internet, IP, IMS, suivie par la création d'un support avec un débit binaire vocal.

6. Noeud d'accès selon la revendication 4 ou procédé selon la revendication 12, dans lequel l'inspection de paquets inclut la détection d'une session interactive vocal plus vidéo en détectant une signalisation de sous-système multimédia de protocole Internet, IP, IMS, suivie par la création d'un support avec un débit binaire vocal et la création d'un support avec un débit binaire vidéo.

7. Noeud d'accès selon la revendication 6 ou procédé selon la revendication 12, dans lequel la détermination de l'au moins une réponse de commande d'admission inclut le refus de la création du support avec un débit binaire vidéo en faveur du support avec le débit binaire vocal.

8. Noeud d'accès selon la revendication 1, dans lequel le module de commande d'admission est configuré en outre pour détecter si un service existant utilise moins de largeur de bande que celle budgétisée pour ce service, et dans lequel l'au moins une réponse de commande d'admission inclut l'admission du nouveau service quand les informations concernant une congestion indiquent que des services existants et le nouveau service auraient une allocation de largeur de bande qui est supérieure à la largeur de bande de ressources disponibles et qu'un service existant utilisant moins de largeur de bande que celle budgétisée pour ce service a été détecté.

9. Noeud d'accès selon la revendication 1 ou procédé selon la revendication 12, dans lequel l'au moins une réponse de commande d'admission est pour admettre le nouveau service et modifier un service existant pour fournir une largeur de bande pour le nouveau service, dans lequel la modification du service existant inclut la modification d'une allocation de ressources du service existant, dans lequel le service existant est un service vidéo capable de fournir des données vidéo en utilisant de multiples représentations vidéo, et dans lequel la modification de l'allocation de ressources est choisie pour déclencher un changement dans une représentation vidéo demandée par un client vidéo associé au service existant.

10. Noeud d'accès selon la revendication 1 ou procédé selon la revendication 12, dans lequel l'inspection de paquets inclut la détection d'un débit binaire en inspectant des informations dans un ou plusieurs paquets utilisés pour lancer le nouveau service.

11. Noeud d'accès selon la revendication 1 ou procédé selon la revendication 12, dans lequel l'au moins une réponse de commande d'admission est déterminé pour maximiser une qualité d'expérience d'utilisateur.

12. Procédé pour l'utilisation dans des réponses de commande d'admission, le procédé étant effectué par un noeud d'accès et comprenant :

l'inspection de paquets communiqués avec un noeud terminal sur au moins un support existant pour détecter des informations concernant des applications associées aux paquets ;
la détection d'une demande d'admission envoyée à partir du noeud terminal sur un de l'au moins un support existant, la demande d'admission étant une demande pour un nouveau service incluant au moins un service vidéo ; et
la détermination d'au moins une réponse de commande d'admission à la demande d'admission sur la base des informations d'application associées aux paquets de la demande d'admission et sur la base d'informations concernant une congestion affectant des communications avec le noeud terminal, dans lequel l'au moins une réponse de commande d'admission inclut une action sur un ou plusieurs paquets qui sont associés à un protocole d'admission correspondant à la demande d'admission, dans lequel l'action sur un ou plusieurs paquets inclut d'admission, le refus, la modification ou le retardement, **caractérisé en ce que** le procédé comprend en outre les étapes suivantes :

la réception de paquets de liaison descendante, le regroupement des paquets de liaison descendante dans des files d'attente, et la planification des paquets de liaison descendante pour une transmission à un ou plusieurs des noeuds terminaux en utilisant des paramètres de planificateur ;
la fourniture de métriques de congestion au module de commande d'admission du noeud d'accès pour l'utilisation dans la détermination de réponses de commande d'admission ; et
le changement de priorités de planification ou d'une allocation de ressources de planification, et la mise à jour sur les paramètres de planificateur.

**13.** Procédé selon la revendication 12, dans lequel le procédé est utilisé dans un système d'évolution à long terme, LTE, et dans lequel l'inspection de paquets inclut la détection d'une session vocale sur LTE, VoLTE, en détectant une signalisation de sous-système multimédia de protocole Internet, IP, IMS, suivie par la création d'un support avec un débit binaire vocal.

**14.** Procédé selon la revendication 12, comprenant en outre le fait de détecter si un service existant utilise moins de largeur de bande que celle budgétisée pour ce service, et dans lequel le nouveau service est admis quand les informations concernant une congestion indiquent que les services existants et le nouveau service auraient une allocation de largeur de bande qui est supérieure à la largeur de bande de ressources disponibles et qu'un service existant utilisant moins de largeur de bande que celle budgétisée pour ce service a été détecté.

**15.** Procédé selon la revendication 12, comprenant en outre l'inspection de paquets associés à la demande d'admission pour détecter les caractéristiques de l'application associée à la demande d'admission.

FIG. 1

EP 2 839 626 B1

FIG. 2

FIG. 3

FIG. 4

FIG. 5

FIG. 6

FIG. 7

Packet Inspection

824 — Other Logic

RTP Stream Detection — 828

Video Stream Detection — 826

FIG. 8

Packet Classificaiton

Application Layer Protocols

930 —

RTSP — 931
RTP — 932
RTMP — 933
HTTP — 934
Other application layer protocol — 939

Transport Layer Protocols

920 —

UDP — 921
TCP — 922
Other transport layer protocol — 929

Internet Layer Protocols

910 —

IPv4 — 911
IPv6 — 912
Other internet layer protocol — 919

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010138035 A
- US 2002188732 A
- US 60755912 A
- US 74410113 A
- US 607559 A
- US 64465012 A
- US 24350712 A